# EUROPEAN PATENT APPLICATION

(11) **EP 3 787 205 A1**
(43) Date of publication of application: **03.03.2021**
(21) Application number: 19793040.7
(22) Date of filing: 19.04.2019
(51) Int. Cl.: H04J 14/02, G02B 5/20, G02B 5/28, H04B 10/572, H04B 10/67

(54) **OPTICAL TRANSMISSION DEVICE, OPTICAL RECEPTION DEVICE, OPTICAL COMMUNICATION SYSTEM, OPTICAL TRANSMISSION METHOD, SETTING METHOD, AND COMPUTER-READABLE MEDIUM**

(30) Priority: 27.04.2018 JP 2018087295
(71) Applicant: NEC Corporation, Tokyo 1088001 (JP)
(72) Inventor: NAKAMURA Kohei, Tokyo 1088001 (JP)
(74) Representative: Vossius & Partner Patentanwälte Rechtsanwälte mbB
(86) International application number: PCT/JP2019/016753
(87) International publication number: WO 2019/208413

(57) **Abstract**

In order to suppress narrowing of the bandwidth of an optical signal which occurs when multiplexing/demultiplexing devices are disposed in multiple stages, the optical transmission device is provided with: first multiplexing devices each for outputting a first wavelength-multiplexed signal by multiplexing post-first-processing signals obtained by applying first filtering processing to transmitted optical signals input thereto; and a second multiplexing device for outputting a second
wavelength-multiplexed signal by multiplexing the first wavelength-multiplexed signals after second filtering processing is applied thereto. The upper limit and the lower limit of a first transmission band, that is, a transmission band pertaining to the first filtering processing, are respectively different from the upper limit and the lower limit of a second transmission band, that is, a transmission band pertaining to the second filtering processing.

## Description

### Technical Field

The present invention relates to an optical communication system configured to transmit and receive optical signals through a transmission line.

### Background Art

A multiplexing-demultiplexing device for transmitting a wavelength multiplexed optical signal including a plurality of optical signals is provided in an optical transmission device provided at a terminal station. For example, a wavelength selective switch (WSS) is used as the multiplexing-demultiplexing device (see PTL 1).

The WSS includes a plurality of ports to which optical signals are input, and a wavelength band for filtering an input optical signal is set to each port. The WSS filters each input optical signal and converts the optical signal into an optical signal in a predetermined frequency band, and then multiplexes the optical signals and outputs the multiplexed optical signal after multiplexing to a transmission line.

### Citation List

### Patent Literature

PTL 1: International Application Publication No. WO 2017/109830

### Summary of Invention

### Technical Problem

In order to enhance wavelength utilization efficiency, it is desirable that a WSS filters each input optical signal in a wavelength band roughly identical to a wavelength band of the optical signal. On the other hand, narrowing of an optical spectrum due to a filter characteristic of the WSS occurs in an optical signal filtered through the roughly identical wavelength band.

It is further conceivable that due to a limitation on the number of ports included in a WSS, WSSs are provided in a plurality of stages in the aforementioned optical transmission device. At this time, it is conceivable that edges of a filter in a first-stage WSS and a filter in a next-stage WSS overlap or become close to each other. In that case, a signal band of an optical signal transmitted through the filters may be excessively narrowed. This may affect transmission quality.

An object of the present invention is to provide an optical transmission device that may suppress narrowing of an optical signal band occurring when multiplexing-demultiplexing devices are provided in a plurality of stages.

### Solution to Problem

An optical transmission device according to the present invention includes: a first multiplexing device configured to output a first wavelength multiplexed signal acquired by multiplexing each of one or more first processed signals acquired by performing first filtering processing on each of one or more input transmission optical signals; and a second multiplexing device configured to output a second wavelength multiplexed signal acquired by multiplexing each of one or more of the first wavelength multiplexed signals undergoing second filtering processing, wherein an upper limit and a lower limit of each of one or more first transmission bands being a transmission band related to each operation of the first filtering processing are respectively different from an upper limit and a lower limit of each of one or more second transmission bands being a transmission band related to each operation of the second filtering processing.

### Advantageous Effects of Invention

A transfer control device according to the present invention or the like may suppress narrowing of an optical signal band occurring when multiplexing-demultiplexing devices are provided in a plurality of stages.

### Brief Description of Drawings

Fig. 1 is a conceptual diagram illustrating a configuration example of an optical transmission device according to a first example embodiment.
Fig. 2 is a conceptual diagram illustrating a set transmission band example related to transmission filtering processing in a multiplexing device according to the first example embodiment.
Fig. 3 is a diagram illustrating a setting example of a band 40m.
Fig. 4 is a diagram illustrating another setting example of the band 40m.
Fig. 5 is a conceptual diagram illustrating a configuration example of an optical communication system according to a second example embodiment.
Fig. 6 is a diagram illustrating general set transmission bands in an optical transmission device for transmission.
Fig. 7 is an image diagram illustrating general transmission optical signals after transmission filtering processing in the optical transmission device for transmission.
Fig. 8 is a diagram illustrating a first example of set transmission bands in an optical transmission device for transmission according to the second example embodiment.
Fig. 9 is an image diagram illustrating transmission optical signals after transmission filtering processing in the optical transmission device for transmission according to the second example embodiment.
Fig. 10 is a diagram illustrating a second example of set transmission bands in the optical transmission device for transmission according to the second example embodiment.
Fig. 11 is a diagram illustrating a third example of set transmission bands in the optical transmission device for transmission according to the second example embodiment.
Fig. 12 is a diagram illustrating general set transmission bands in a transmission device for reception.
Fig. 13 is an image diagram illustrating general reception optical signals after reception filtering processing in the optical transmission device for reception.
Fig. 14 is a diagram illustrating a first example of set transmission bands in an optical transmission device for reception according to the second example embodiment.
Fig. 15 is an image diagram illustrating reception optical signals after reception filtering processing in the optical transmission device for reception according to the second example embodiment.
Fig. 16 is a diagram illustrating a second example of set transmission bands in the optical transmission device for reception according to the second example embodiment.
Fig. 17 is a diagram illustrating a third example of set transmission bands in the optical transmission device for reception according to the second example embodiment.
Fig. 18 is a conceptual diagram illustrating a configuration example of an optical communication system according to a third example embodiment.
Fig. 19 is a conceptual diagram illustrating a processing flow of processing performed by a control unit included in the optical communication system according to the third example embodiment.
Fig. 20 is a conceptual diagram illustrating a configuration example of an optical transmission device according to a fourth example embodiment.
Fig. 21 is a block diagram illustrating a minimum configuration of the optical transmission device according to the example embodiments.

### Example Embodiment

### First Example Embodiment

A first example embodiment is an example embodiment related to an optical transmission device including a multistage multiplexing device. Configuration and Operation

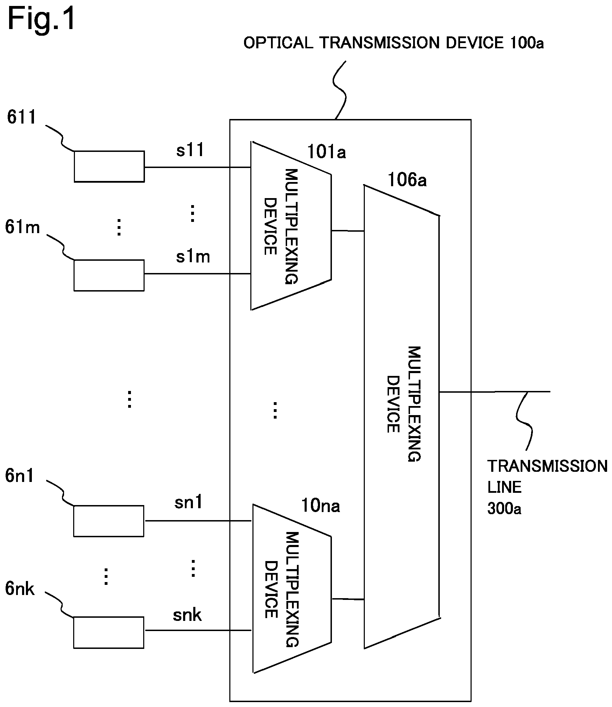

Fig. 1 is a conceptual diagram illustrating a configuration of an optical transmission device 100a being an example of the optical transmission device according to the first example embodiment.

The optical transmission device 100a includes multiplexing devices 101a to 10na being n multiplexing devices and a multiplexing device 106a. Note that n is a number equal to or greater than 2.

Transmission optical signals s11 to s1m are input to the multiplexing device 101a from transmitters 611 to 61m being m transmitters, respectively. The transmission optical signals s11 to s1m are optical signals having wavelengths different from one another. Further, the transmission optical signals s11 to s1m are optical signals in channels different from one another. A channel refers to a wavelength grid defined by a predetermined center frequency interval and a predetermined frequency bandwidth.

The multiplexing device 101a is a multiplexing device in a first stage viewed from the transmitters 611 to 61m. The multiplexing device 101a performs, on each of the transmission optical signals s11 to s1m, transmission filtering processing [first-stage transmission filtering processing (first filtering processing)] of transmitting a set transmission band (frequency band) set to the transmission optical signal. The set transmission bands do not overlap one another. The multiplexing device 101a may be configured with a WSS. The multiplexing device 101a may include a plurality of ports to which the transmission optical signals s11 to s1m are input, respectively, and a transmission band may be set to each port.

Then, the multiplexing device 101a multiplexes the transmission optical signals after the first-stage transmission filtering processing and inputs a first-stage multiplexed transmission optical signal being a transmission optical signal after multiplexing to the multiplexing device 106a.

The same applies to multiplexing devices other than the multiplexing device 101a out of the multiplexing devices 101a to 10na.

The multiplexing device 106a is a multiplexing device in a next stage viewed from the transmitters 611 to 61m. The multiplexing device 106a performs, on each of the first-stage multiplexed transmission optical signals after multiplexing input from the multiplexing devices 101a to 10na, next-stage transmission filtering processing (second filtering processing) of transmitting the first-stage multiplexed transmission optical signal through a set set transmission band. The set transmission bands related to the next-stage transmission filtering processing do not overlap one another. The multiplexing device 106a may be configured with a WSS. The multiplexing device 106a may include a plurality of ports to which the first-stage multiplexed transmission optical signals after multiplexing input from the multiplexing devices 101a to 10na are input, respectively, and a transmission band may be set to each port.

It is assumed herein that "transmission" related to filtering processing refers to an amount of attenuation of a signal undergoing the filtering processing being equal to or less than a predetermined value. For example, the amount of attenuation is 3 dB. A band in which an amount of attenuation of a signal undergoing the filtering processing is equal to or less than a predetermined value may be referred to as a transmission region, and a band in which the amount is equal to or more than the predetermined value may be referred to as a cutoff region.

Next, the multiplexing device 106a multiplexes the first-stage multiplexed transmission optical signals after the next-stage transmission filtering processing and outputs a next-stage multiplexed transmission optical signal after multiplexing to a transmission line 300a. The next-stage multiplexed transmission optical signal is transmitted to an unillustrated optical transmission device on the receiving side.

In the optical transmission device 100a, none of the upper limits and the lower limits of the set transmission bands related to the first-stage transmission filtering processing overlap any of the upper limits and the lower limits of the set transmission bands related to the next-stage transmission filtering processing. Each of the upper limit and the lower limit of a set transmission band may be referred to as an edge.

It is assumed herein that two frequencies "overlapping each other," "matching," and "being equal" all refer to the two frequencies being the same or close to each other.

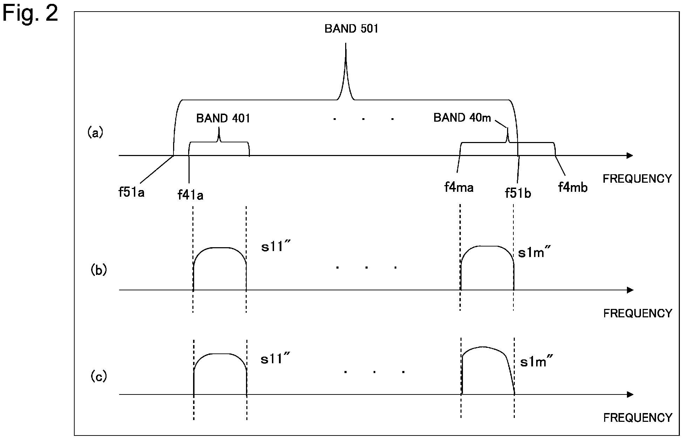

Fig. 2 is a conceptual diagram illustrating set transmission band examples related to the transmission filtering processing performed on the transmission optical signals s11 to s1m illustrated in Fig. 1 in the multiplexing devices 101a and 106a.

Diagram (a) in Fig. 2 illustrates set transmission bands related to the transmission filtering processing in each of the multiplexing devices 101a, 10na, and 106a illustrated in Fig. 1. Diagram (b) in Fig. 2 illustrates transmission optical signals after the next-stage transmission filtering processing when each transmission band is as illustrated in Diagram (a) in Fig. 2. Diagram (c) in Fig. 2 illustrates transmission optical signals after the next-stage transmission filtering processing in a case of general set transmission bands. A multiplexing device can set a band related to filtering processing on a per predetermined band basis. In the general set transmission band, a band related to filtering processing is set in such a way as to include a channel of a transmitted transmission optical signal and not to include a channel of an untransmitted transmission optical signal. Further, in the general set transmission band, the upper limit of a band 40m being a set transmission band related to the first-stage transmission filtering processing matches the upper limit of a band 501 being a set transmission band related to the next-stage transmission filtering processing.

Diagrams (b) and (c) in Fig. 2 illustrate optical spectra of the transmission optical signals s11 to slm. Each of the transmission optical signals s11 to s1m represents an optical signal of a channel in an illustrated band.

Bands 401 to 40m illustrated in Diagram (a) in Fig. 2 are set transmission bands set to the transmission optical signals s11 to s1m in the multiplexing device 101a in this order. The bands 401 to 40m include bands including wavelengths included in the transmission optical signals s11 to s1m, respectively. Frequency bands included in the bands 401 to 40m become higher in this order. The bands 401 to 40m do not overlap one another.

The band 501 is a set transmission band related to the next-stage transmission filtering processing performed in the multiplexing device 106a on the first-stage multiplexed transmission optical signal input from the multiplexing device 101a. The band 501 includes a band including the wavelengths included in the transmission optical signals s11 to s1m constituting the first-stage multiplexed transmission optical signal.

A relation between the band 40m and the band 501 will be described. A frequency f4mb being the upper limit of the band 40m set by the multiplexing device 101a is positioned on the higher frequency side of a frequency f51b set by the multiplexing device 106a. The band 40m is a set transmission band set to the transmission optical signal s1m by the multiplexing device 101a. The transmission optical signals s11 to s1m constitute the first-stage multiplexed transmission optical signal output by the multiplexing device 101a, and the transmission optical signal s1m is an optical signal of a channel on the highest frequency side in the first-stage multiplexed transmission optical signal. The channel of the transmission optical signal s1m may be referred to as an edge channel included in the first-stage multiplexed transmission optical signal.

As described above, an edge of the band 40m through which the multiplexing device 101a filters the optical signal of the edge channel is positioned on the higher frequency side of the band 501. In other words, the band 40m is provided in such a way as to include a band outside the band 501.

A bandwidth of the band 40m in the multiplexing device 101a will be described.

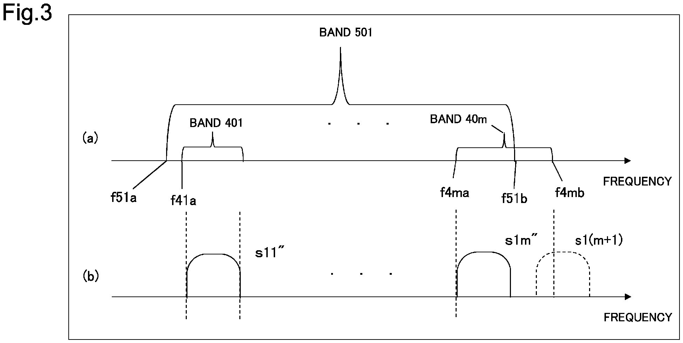

Fig. 3 is a diagram illustrating a setting example of the band 40m. A transmission optical signal s1(m+1) a spectrum of which is represented by a dotted line is an optical signal not included in the first stage multiplexed optical signal constituted by the transmission optical signals s11 to s1m. A channel of the transmission optical signal s1(m+1) adjoins a channel of the transmission optical signal s1m. As illustrated in Fig. 3, the band 40m may be set in such a way as to include at least part of the channel of the transmission optical signal s1(m+1), that is, the adjoining channel of the transmission optical signal s1m.

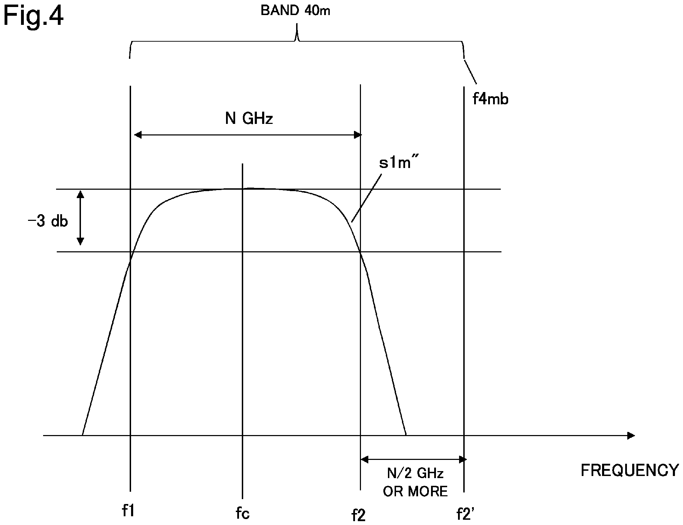

Fig. 4 is a diagram illustrating another setting example of the band 40m. A center frequency of the channel of the transmission optical signal s1m or a center frequency of a band related to filtering processing generally set to transmit the transmission optical signal s1m is denoted as fc. The band related to generally set filtering processing as described above is a band including a channel of a transmitted transmission optical signal and not including a channel of an untransmitted transmission optical signal. For example, as illustrated in Fig. 4, a lower frequency and a higher frequency of frequencies at 3 dB down from transmitted power of the center frequency fc in the band 40m are denoted as frequencies f1 and f2, respectively. In that case, when a bandwidth between the frequency f1 and the frequency f2 is denoted as N (GHz), the upper limit frequency f4mb may be set in such a way as to include N/2 (GHz) or more on the higher frequency side.

The band 40m has only to be provided in such a way as to include a band outside the band 501, as described above, and the bandwidth of the band 40a is not limited to the band illustrated in Fig. 3 or Fig. 4.

In the case of the aforementioned general set transmission band, as illustrated in Diagram (c) in Fig. 2, a signal level of a transmission optical signal slm" in the neighborhood of the upper limit of the signal band is significantly decreased. The reason is that the neighborhood is affected by both the first-stage transmission filtering processing and the next-stage transmission filtering processing. Accordingly, the signal band of the transmission optical signal s1m" is narrowed.

On the other hand, in the case of the set transmission band according to the present example embodiment illustrated in Diagram (a) in Fig. 2, narrowing of the signal band of the transmission optical signal slm", as is the case illustrated in Diagram (c) in Fig. 2, is not observed in the transmission optical signal s1m" as illustrated in Diagram (b) in Fig. 2. The reason is that the upper limit of the signal band of the transmission optical signal s1m" is determined by the frequency f51b being the upper limit of the band 501 related to the next-stage transmission filtering processing and is not affected by the frequency f4mb being the upper limit of the band 40m related to the first-stage transmission filtering processing.

While the transmission optical signal s1m of the edge channel has been described to be an optical signal on the highest frequency side in the first-stage multiplexed transmission optical signal in the description above, a similar configuration is applicable in a case of an optical signal on the lowest frequency side.

The optical transmission device 100a may be configured as an open cable interface (OCI). At this time, the transmitters 611 to 61m connected to the optical transmission device 100a may be manufactured by a plurality of different vendors.

The optical transmission device according to the present example embodiment may include a three-or-more-stage multiplexing device.

The optical transmission device according to the present example embodiment may perform three-or-more-stage transmission filtering processing. In that case, set transmission bands related to the transmission filtering processing in the optical transmission device are set in such a way that none of the lower limits and the upper limits of the set transmission bands related to the respective stages of the transmission filtering processing overlap one another.

### Effects

In the optical transmission device according to the first example embodiment, none of the lower limits and the upper limits of set transmission bands related to the first-stage transmission filtering processing overlap any of the lower limits and the upper limits of set transmission bands related to the next-stage transmission filtering processing. In particular, with respect to an optical signal of an edge channel in the first-stage multiplexed transmission optical signal, the lower limit and the upper limit of the transmission band related to the first-stage transmission filtering processing and the lower limit and the upper limit of the transmission band related to the next-stage transmission filtering processing do not overlap one another. Accordingly, every upper limit and upper limit of a signal band of a transmission optical signal included in the multiplexed transmission optical signal output from the optical transmission device is determined either by the first-stage transmission filtering processing or by the next-stage transmission filtering processing. In other words, none of the upper limits and the lower limits are affected by twofold transmission filtering processing by the first-stage transmission filtering processing and the next-stage transmission filtering processing. Accordingly, the optical transmission device may suppress narrowing of a signal band of a transmission optical signal due to the twofold transmission filtering processing.

### Second Example Embodiment

A second example embodiment is an example embodiment related to an optical communication system including optical transmission devices on the transmitting side and the receiving side.

### Configuration and Operation

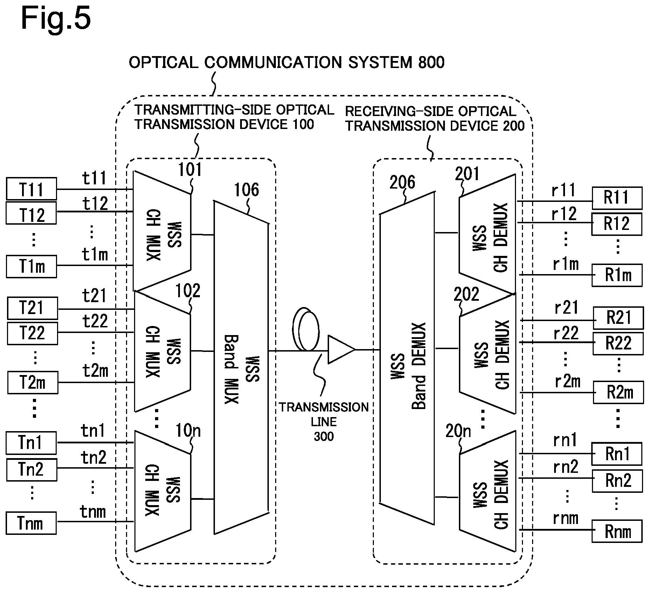

Fig. 5 is a conceptual diagram illustrating a configuration of an optical communication system 800 being an example of an optical communication system according to the second example embodiment.

The optical communication system 800 includes a transmitting-side optical transmission device 100, a receiving-side optical transmission device 200, and a transmission line 300.

Each of the transmitting-side optical transmission device 100 and the receiving-side optical transmission device 200 may be configured as an open cable interface (OCI).

The transmitting-side optical transmission device 100 includes WSS_CH_MUXes 101 to 10n being n optical multiplexing devices and a WSS_Band_MUX 106 being an optical multiplexing device.

Transmission optical signals t11 to t1m are input to the WSS_CH_MUX 101 from transmitters T11 to T1m being m transmitters, respectively.

The WSS_CH_MUX 101 is a multiplexing device in a first stage viewed from the transmitters T11 to T1m. The WSS_CH_MUX 101 performs, on each of the transmission optical signals t11 to tlm, the aforementioned first-stage transmission filtering processing of transmitting a set transmission band set to the transmission optical signal. The set transmission bands are set in such a way as not to overlap one another.

Then, the multiplexing device 101a multiplexes the transmission optical signals after the first-stage transmission filtering processing and inputs a first-stage multiplexed transmission optical signal being a transmission optical signal after multiplexing to the WSS_Band_MUX 106.

The same applies to the WSS_CH_MUXes 102 to 10n.

The WSS_Band_MUX 106 is a multiplexing device in a next stage viewed from the transmitters T11 to Tnm. The WSS_Band_MUX 106 performs, on each of the first-stage multiplexed transmission optical signals input from the WSS_CH_MUXes 101 to 10n, next-stage transmission filtering processing of transmitting a set transmission band set to the first-stage multiplexed transmission optical signal. The set transmission bands related to the next-stage transmission filtering processing are set in such a way as not to overlap one another.

Then, the WSS_Band_MUX 106 multiplexes the first-stage multiplexed transmission optical signals after the next-stage transmission filtering processing and inputs a next-stage multiplexed transmission optical signal after multiplexing to the transmission line 300. The next-stage multiplexed transmission optical signal is transmitted toward the receiving-side optical transmission device 200.

In the transmitting-side optical transmission device 100, each of the upper limits and the lower limits of the set transmission bands related to the first-stage transmission filtering processing is set in such a way as not to overlap any of the upper limits and the lower limits of the set transmission bands related to the next-stage transmission filtering processing.

The receiving-side optical transmission device 200 includes a WSS_Band_DEMUX 206 being an optical demultiplexing device and WSS_CH_DEMUXes 201 to 20n being n optical demultiplexing devices.

A first-stage multiplexed reception optical signal is input to the WSS_Band_DEMUX 206 from the transmitting-side optical transmission device 100 through the transmission line 300. The first-stage multiplexed reception optical signal is the aforementioned next-stage multiplexed transmission optical signal after being transmitted from the transmitting-side optical transmission device 100 and passing through the transmission line 300.

The WSS_Band_DEMUX 206 is a demultiplexing device in a first stage viewed from the transmission line 300.

The WSS_Band_DEMUX 206 demultiplexes the input first-stage multiplexed reception optical signal into first-stage demultiplexed reception optical signals being optical signals in n signal bands.

The WSS_Band_DEMUX 206 performs, on each of the first-stage demultiplexed reception optical signals, filtering processing (first-stage reception filtering processing) of transmitting a set transmission band set to the first-stage demultiplexed reception optical signal. The set transmission bands are set in such a way as not to overlap one another.

Then, each of next-stage reception multiplexed optical signals being the first-stage demultiplexed reception optical signals undergoing the first-stage reception filtering processing is input to a related WSS_CH_DEMUX out of the WSS_CH_DEMUXes 201 to 20n according to a set transmission band thereof.

The WSS_CH_DEMUX 201 demultiplexes a next-stage multiplexed reception optical signal input from the WSS_Band_DEMUX 206 into reception optical signals in m signal bands.

Each of the demultiplexed reception optical signals becomes each of reception optical signals r11 to r1m by next-stage reception filtering processing through a set transmission band set to the reception optical signal. The reception optical signals r11 to r1m are optical signals relating to the transmission optical signals t11 to t1m in this order.

The reception optical signals r11 to r1m are input to receivers R11 to R1m in this order.

The same applies to the WSS_CH_DEMUXes 202 to 20n.

In the receiving-side optical transmission device 200, an edge of each set transmission band related to the first-stage reception filtering processing is set in such a way as not to overlap an edge of each set transmission band related to the next-stage transmission filtering processing.

Next, an operation of the transmission filtering processing according to the second example embodiment will be described by comparison with a general case.

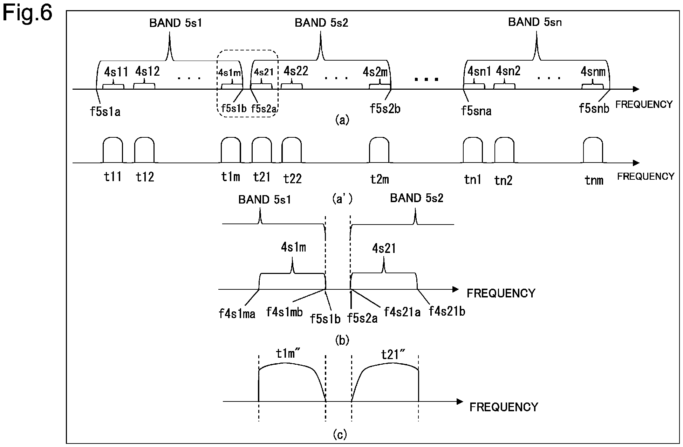

Fig. 6 is a diagram illustrating general set transmission bands related to the first-stage transmission filtering processing and the next-stage transmission filtering processing. Diagram (a') in Fig. 6 illustrates the transmission optical signals t11 to tnm illustrated in Fig. 5. Diagram (b) in Fig. 6 is an enlarged view of a part enclosed by broken lines illustrated in Diagram (a) in Fig. 6. Diagram (c) in Fig. 6 is an image diagram illustrating transmission optical signals after undergoing the first-stage transmission filtering processing and the next-stage transmission filtering processing with set transmission bands illustrated in Diagram (b) in Fig. 6.

In the following description, each of bands 4s11 to 4s1m represents the set transmission band related to the aforementioned first-stage transmission filtering processing performed on each of the transmission optical signals t11 to t1m in the WSS_CH_MUX 101. The same applies to bands 4s21 to 4s2m and bands 4sn1 to 4snm.

In the following description, each of bands 5s1 to 5sn represents a set transmission band related to the next-stage transmission filtering processing. The next-stage transmission filtering processing is performed on a first-stage multiplexed transmission optical signal acquired by multiplexing the transmission optical signals t11 to t1m undergoing the first-stage transmission filtering processing in the WSS_Band_MUX 106 illustrated in Fig. 5.

It is desirable for enhanced wavelength utilization efficiency that channels of transmission optical signals adjoin one another, and the channels of the transmission optical signals t11 to t1m, t21 to t2m, and t31 to t3m illustrated in Fig. 6 adjoin one other. In particular, the transmission optical signals t1m and t21 are optical signals constituting different first stage multiplexed optical signals but are optical signals of channels adjoining each other.

As illustrated in Diagrams (a) and (b) in Fig. 6, a frequency f4s1mb being the upper limit of the band 4s1m roughly matches a frequency f5s1b being the upper limit of the band 5s1. A frequency f4s21a being the lower limit of the band 4s21 roughly matches a frequency f5s2a being the lower limit of the band 5s2.

As illustrated in Diagram (a) in Fig. 6, a frequency f5s2b being the upper limit of the band 5s2 roughly matches the upper limit of the band 4s2m. A frequency f5sna being the lower limit of the band 5sn roughly matches the lower limit of the band 4sn1.

The same applies to other set transmission bands illustration of which is omitted in Diagram (a) in Fig. 6.

A frequency f5s1a being the lower limit of the band 5s1 is set on the lower frequency side of the lower limit of the band 4s11. A frequency f5snb being the upper limit of the band 5sn is set on the higher frequency side of the band 4snm.

A transmission optical signal tlm" illustrated in Diagram (c) in Fig. 6 is the transmission optical signal t1m illustrated in Fig. 5 undergoing the first-stage transmission filtering processing with the band 4s1m as a set transmission band and the next-stage transmission filtering processing with the band 5s1 as a set transmission band.

Signal strength of the transmission optical signal t1m" in the neighborhood of the upper limit of the signal band is affected by both the first-stage transmission filtering processing and the next-stage transmission filtering processing and therefore is remarkably decreased. Consequently, the signal band of the transmission optical signal t1m" is remarkably narrowed.

A transmission optical signal t21" is the transmission optical signal t21 illustrated in Fig. 5 undergoing the first-stage transmission filtering processing with the band 4s21 as a set transmission band and the next-stage transmission filtering processing with the band 5s2 as a set transmission band.

Signal strength of the transmission optical signal t21" in the neighborhood of the lower limit of the signal band is affected by both the first-stage transmission filtering processing and the next-stage transmission filtering processing and therefore is remarkably decreased. Consequently, the signal band of the transmission optical signal t21" is remarkably narrowed.

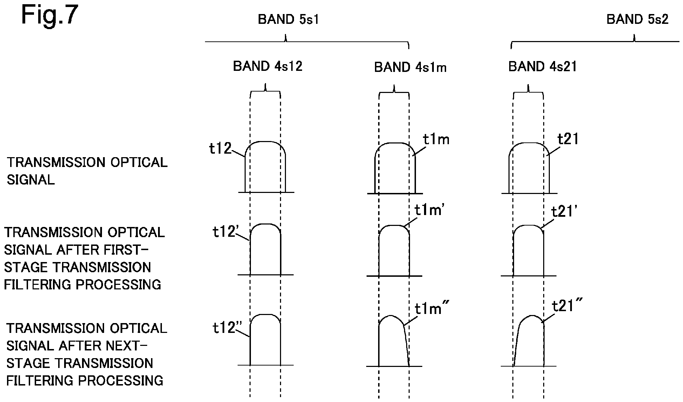

Fig. 7 is an image diagram illustrating transmission optical signals after the transmission filtering processing in each stage when the set transmission bands illustrated in Fig. 6 are set in the transmitting-side optical transmission device 100 illustrated in Fig. 5.

The horizontal axis of the signals illustrated in Fig. 7 represents frequency, and the vertical axis represents signal strength.

The transmission optical signal t12 illustrated in Fig. 5 becomes a transmission optical signal t12' with a signal band identical to the band 4s12 by the first-stage transmission filtering processing with the band 4s12 as the set transmission band.

The band 5s1 being a set transmission band related to the next-stage transmission filtering processing covers the signal band of the transmission optical signal t12'. Accordingly, the signal band of a transmission optical signal t12" after the next-stage transmission filtering processing is the same as that of the transmission optical signal t12'.

The upper limit of the signal band of the transmission optical signal t1m is on the higher frequency side of the upper limit of the band 5s1. Accordingly, the upper limit of the signal band of the transmission optical signal t1m' after the first-stage reception filtering processing becomes the upper limit of the band 5s1.

On the other hand, the lower limit of the signal band of the transmission optical signal t1m is within the band 5s1. Accordingly, a shape of the transmission optical signal tlm' after the first-stage reception filtering processing in the neighborhood of the signal band lower limit is identical to a shape of the transmission optical signal t1m in the neighborhood of the lower limit of the signal band. The signal band upper limit of the transmission optical signal t1m' becomes identical to the upper limit of the band 5s1 by the first-stage transmission filtering processing with the band 5s1 as the set transmission band.

The upper limit of the band 5s1 being a set transmission band related to the next-stage transmission filtering processing matches the upper limit of the band 4s1m. Accordingly, a signal level of the higher frequency side of the signal band of the transmission optical signal tlm" after the next-stage transmission filtering processing is further decreased by the next-stage transmission filtering processing. Consequently, the transmission optical signal tlm" has a remarkably narrowed signal band compared with the transmission optical signal t12".

The transmission optical signal t21 becomes a transmission optical signal t21' having a signal band identical to the band 4s21 by the first-stage transmission filtering processing with the band 4s21 as the set transmission band.

The lower limit of the band 5s2 being a set transmission band related to the next-stage transmission filtering processing matches the lower limit of the band 4s21. Accordingly, a signal level of the lower frequency side of the signal band of the transmission optical signal t21" after the next-stage transmission filtering processing is further decreased by the next-stage transmission filtering processing. Consequently, the transmission optical signal t21" has a remarkably narrowed signal band compared with the transmission optical signal t12".

As described with reference to Fig. 7, when the set transmission bands illustrated in Fig. 6 are set, a signal band of a transmission optical signal after the next-stage transmission filtering processing may be remarkably narrowed.

Next, the case of the second example embodiment will be described.

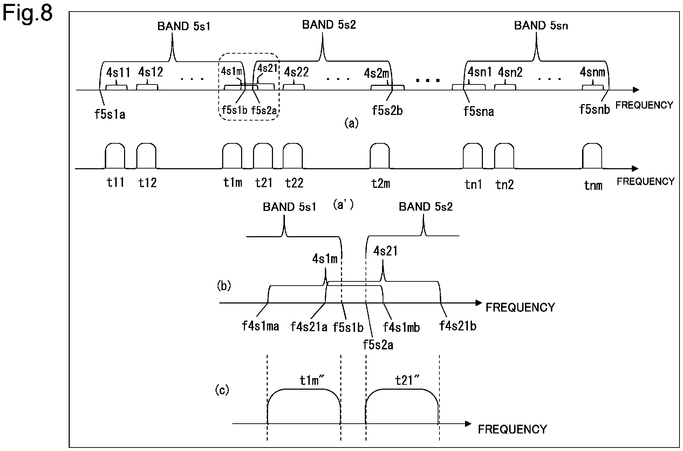

Fig. 8 is a diagram illustrating an example of set transmission bands related to the first-stage transmission filtering processing and the next-stage transmission filtering processing, according to the second example embodiment. Diagram (a') in Fig. 8 illustrates the transmission optical signals t11 to tnm illustrated in Fig. 5. Diagram (b) in Fig. 8 is an enlarged view of a part enclosed by broken lines illustrated in Diagram (a) in Fig. 8. Diagram (c) in Fig. 8 is an image diagram illustrating transmission optical signals after undergoing the first-stage transmission filtering processing and the next-stage transmission filtering processing with set transmission bands illustrated in Diagram (b) in Fig. 8.

As illustrated in Diagrams (a) and (b) in Fig. 8, a frequency f4s1mb being the upper limit of the band 4s1m is set on the higher frequency side of a frequency f5s1b being the upper limit of the band 5s1. A frequency f4s21a being the lower limit of the band 4s21 is set on the lower frequency side of a frequency f5s2a being the lower limit of the band 5s2.

As illustrated in Diagram (a) in Fig. 8, the upper limit of the band 4s2m is set on the higher frequency side of a frequency f5s2b being the upper limit of the band 5s2. The lower limit of the band 4sn1 is set on the lower frequency side of a frequency f5sna being the lower limit of the band 5sn.

The same applies to other set transmission bands illustration of which is omitted in Diagram (a) in Fig. 8.

A frequency f5s1a being the lower limit of the band 5s1 is set on the lower frequency side of the lower limit of the band 4s11. A frequency f5snb being the upper limit of the band 5sn is set on the higher frequency side of the band 4snm.

An optical signal t1m" illustrated in Diagram (c) in Fig. 8 is the optical signal t1m illustrated in Fig. 5 undergoing the first-stage transmission filtering processing with the band 4s1m as a set transmission band and the next-stage transmission filtering processing with the band 5s1 as a set transmission band.

Signal strength of the optical signal t1m" in the neighborhood of the upper limit of the signal band is affected by the next-stage transmission filtering processing but is not affected by the first-stage transmission filtering processing. Signal strength of the optical signal t1m" in the neighborhood of the lower limit of the signal band is affected by the first-stage transmission filtering processing but is not affected by the next-stage transmission filtering processing. Accordingly, the signal strength of the optical signal t1m" in the neighborhood of the upper limit of the signal band and the signal length in the neighborhood of the lower limit do not exhibit remarkable decrease due to being affected by both the first-stage transmission filtering processing and the next-stage transmission filtering processing. Consequently, the signal band of the optical signal t1m" is not narrowed as is the case with the signal band of the optical signal t1m" illustrated in Fig. 6.

A transmission optical signal t21" is the transmission optical signal t21 illustrated in Fig. 5 undergoing the first-stage transmission filtering processing with the band 4s21 as a set transmission band and the next-stage transmission filtering processing with the band 5s2 as a set transmission band.

Signal strength of the transmission optical signal t21" in the neighborhood of the upper limit of the signal band is affected by the first-stage transmission filtering processing but is not affected by the next-stage transmission filtering processing. Signal strength of the transmission optical signal t21" in the neighborhood of the lower limit of the signal band is affected by the next-stage transmission filtering processing but is not affected by the first-stage transmission filtering processing. Accordingly, the signal strength of the transmission optical signal t21" in the neighborhood of the upper limit of the signal band and the signal strength in the neighborhood of the lower limit do not exhibit remarkable decrease due to being affected by both the first-stage transmission filtering processing and the next-stage transmission filtering processing. Consequently, the signal band of the transmission optical signal t21" is not narrowed as is the case with the signal band of the transmission optical signal t21" illustrated in Fig. 6.

When the set transmission bands illustrated in Fig. 8 are set, none of edges of the set transmission bands related to the first-stage transmission filtering processing overlap any edge of the set transmission bands related to the next-stage transmission filtering processing. Accordingly, in this case, narrowing of a signal band, as is the case in the transmission optical signals t1m" and t21" illustrated in Fig. 7, does not occur.

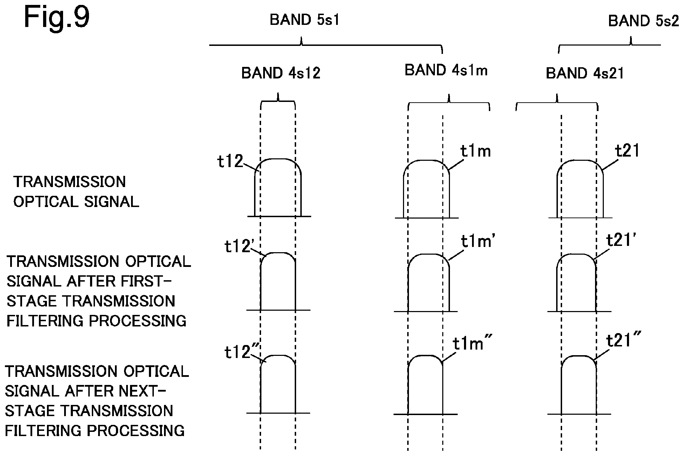

Fig. 9 is an image diagram illustrating transmission optical signals after the transmission filtering processing in each stage when the set transmission bands illustrated in Fig. 8 are set in the transmitting-side optical transmission device 100 illustrated in Fig. 5.

The horizontal axis of the signals illustrated in Fig. 9 represents frequency, and the vertical axis represents signal strength.

A transmission optical signal t12 illustrated in Fig. 9 becomes a transmission optical signal t12' having a signal band identical to the band 4s12 by the first-stage transmission filtering processing with the band 4s12 as the set transmission band.

The band 5s1 being a set transmission band related to the next-stage transmission filtering processing covers the signal band of the transmission optical signal t12'. Accordingly, the signal band of a transmission optical signal t12" after the next-stage transmission filtering processing is the same as that of the transmission optical signal t12'.

The lower limit of the signal band of the transmission optical signal t1m matches the lower limit of the band 4s1m by the first-stage transmission filtering processing with the band 4s1m as the set transmission band.

On the other hand, the upper limit of the band 4s1m is set on the higher frequency side of the upper limit of the signal band of the transmission optical signal t1m. Accordingly, a shape of the transmission optical signal t1m in the neighborhood of the signal band upper limit is not affected by the first-stage transmission filtering processing. Accordingly, the shape of the transmission optical signal t1m in the neighborhood of the upper limit of the signal band becomes identical to a shape of the transmission optical signal tlm' after the first-stage transmission filtering processing in the neighborhood of the signal band upper limit.

The neighborhood of the signal band lower limit of the transmission optical signal tlm' is within the band 5s1 and therefore is not affected by the next-stage transmission filtering processing. Accordingly, a shape of the transmission optical signal tlm" after the next-stage transmission filtering processing in the neighborhood of the signal band lower limit becomes identical to a shape of the transmission optical signal tlm' in the neighborhood of the signal band lower limit.

On the other hand, the neighborhood of the signal band upper limit of the transmission optical signal tlm' is on the higher frequency side of the upper limit of the band 5s1. Accordingly, the upper limit of the transmission optical signal t1m" becomes identical to the upper limit of the band 5s1 by the next-stage transmission filtering processing.

Thus, the signal band of the transmission optical signal tlm" after the next-stage transmission filtering processing is set by the lower limit of the band 4s1m and the upper limit of the band 5s1. Further, the shape of the transmission optical signal t1m' in the neighborhood of the signal band upper limit is affected by the next-stage transmission filtering processing but is not affected by the first-stage transmission filtering processing. Accordingly, remarkable decrease in signal strength due to being affected twofold by the first-stage transmission filtering processing and the next-stage transmission filtering processing, as is the case in the transmission optical signal t1m" illustrated in Fig. 7, does not occur in the shape of the transmission optical signal tlm" in the neighborhood of the signal band upper limit.

On the other hand, the upper limit of a signal band of the transmission optical signal t21 is on the higher frequency side of the upper limit of the band 4s21. Accordingly, the upper limit of the signal band of the transmission optical signal t21 matches the upper limit of the band 4s21 by the first-stage transmission filtering processing with the band 4s21 as the set transmission band.

On the other hand, the lower limit of the band 4s21 is set on the lower frequency side of the lower limit of the signal band of the transmission optical signal t21. Accordingly, a shape of the transmission optical signal t21 in the neighborhood of the signal band lower limit is not affected by the first-stage transmission filtering processing. Accordingly, a shape of a transmission optical signal t21' in the neighborhood of the signal band lower limit matches a shape of the transmission optical signal t21 after the first-stage transmission filtering processing in the neighborhood of the signal band lower limit.

The lower limit of the signal band of the transmission optical signal t21' is set on the lower frequency side of the lower limit of the band 5s1. Accordingly, a shape of a transmission optical signal t21" after the next-stage transmission filtering processing in the neighborhood of the signal band lower limit becomes identical to a shape of the neighborhood of the lower limit of the band 5s1.

On the other hand, a shape of the transmission optical signal t21' in the neighborhood of the signal band upper limit is set within the band 5s1. Accordingly, the shape of the transmission optical signal t21" after the next-stage transmission filtering processing in the neighborhood of the signal band upper limit becomes identical to the shape of the transmission optical signal t21' in the neighborhood of the signal band upper limit.

Thus, the signal band of the transmission optical signal t21" after the next-stage transmission filtering processing is set by the upper limit of the band 4s21 and the lower limit of the band 5s1. Further, signal strength of the transmission optical signal t21" in the neighborhood of the signal band lower limit is affected by the next-stage transmission filtering processing but is not affected by the first-stage transmission filtering processing. Accordingly, remarkable decrease in signal strength due to being affected twofold by the first-stage transmission filtering processing and the next-stage transmission filtering processing, as is the case in the transmission optical signal t21" illustrated in Fig. 7, does not occur in the shape of the transmission optical signal t21" in the neighborhood of the signal band upper limit.

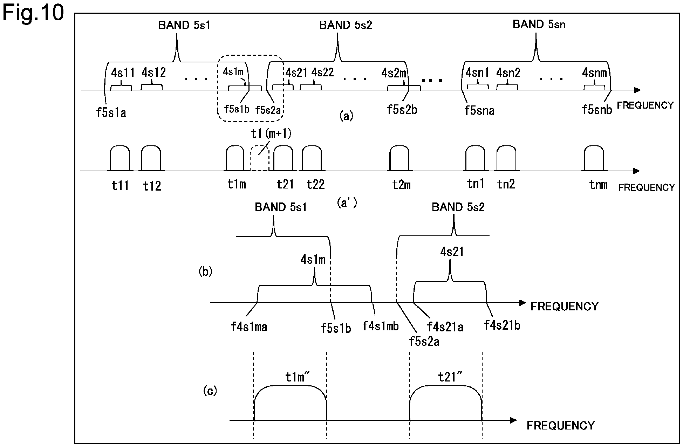

The transmission optical signals t1m and t21 have been described to be optical signals of channels adjoining each other in the description above. A setting example of the transmission optical signals t1m and t21 not being optical signals of channels adjoining each other will be described. Fig. 10 is a diagram illustrating a second setting example of set transmission bands related to the first-stage transmission filtering processing and the next-stage transmission filtering processing, according to the second example embodiment. Diagram (a') in Fig. 10 illustrates the transmission optical signals t11 to tnm illustrated in Fig. 5. Diagram (b) in Fig. 10 is an enlarged view of a part enclosed by broken lines illustrated in Diagram (a) in Fig. 10. Diagram (c) in Fig. 10 is an image diagram illustrating transmission optical signals after undergoing the first-stage transmission filtering processing and the next-stage transmission filtering processing with set transmission bands illustrated in Diagram (b) in Fig. 10.

As illustrated in Diagram (a') in Fig. 10, the transmission optical signal t1m and the transmission optical signal t21 are not optical signals of channels adjoining each other, and a a bandwidth not belonging to any channel exists between the two transmission optical signals. For example, as illustrated in Diagram (a') in Fig. 10, an empty channel not used in transmission of a transmission optical signal exists as the bandwidth. For the sake of description, the empty channel is illustrated as a channel of the transmission optical signal t1(m+1)in Diagram (a') in Fig. 10. The transmission optical signal t1(m+1) is an actually unused transmission optical signal and is an optical signal not input to the WSS_Band_MUX 106. A bandwidth of the empty channel is not limited to a case of a bandwidth being identical to those of other reception optical signals as illustrated.

As illustrated in Diagrams (a) and (b) in Fig. 10, a frequency f4s1mb being the upper limit of the band 4s1m is set on the higher frequency side of a frequency f5s1b being the upper limit of the band 5s1. A frequency f4s21a being the lower limit of the band 4s21 is set on the higher frequency side of a frequency f5s2a being the lower limit of the band 5s2.

As illustrated in Diagram (a) in Fig. 10, the upper limit of the band 4s2m is set on the higher frequency side of a frequency f5s2b being the upper limit of the band 5s2. The lower limit of the band 4sn1 is set on the higher frequency side of a frequency f5sna being the lower limit of the band 5sn.

The same applies to other set transmission bands illustration of which is omitted in Diagram (a) in Fig. 10.

A frequency f5s1a being the lower limit of the band 5s1 is set on the lower frequency side of the lower limit of the band 4s11. A frequency f5snb being the upper limit of the band 5sn is set on the higher frequency side of the upper limit of the band 4snm.

An optical signal tlm" illustrated in Diagram (c) in Fig. 10 is the optical signal t1m illustrated in Fig. 5 undergoing the first-stage transmission filtering processing with the band 4s1m as a set transmission band and the next-stage transmission filtering processing with the band 5s1 as a set transmission band.

Signal strength of the optical signal tlm" in the neighborhood of the upper limit of the signal band is affected by the next-stage transmission filtering processing but is not affected by the first-stage transmission filtering processing. Signal strength of the optical signal tlm" in the neighborhood of the lower limit of the signal band is affected by the first-stage transmission filtering processing but is not affected by the next-stage transmission filtering processing. Accordingly, the signal strength of the signal band of the optical signal t1m" in the neighborhood of the upper limit and the signal strength in the neighborhood of the lower limit do not exhibit remarkable decrease due to being affected by both the first-stage transmission filtering processing and the next-stage transmission filtering processing. Accordingly, the signal band of the optical signal t1m" is not narrowed as is the case with the signal band of the optical signal t1m" illustrated in Fig. 6.

A transmission optical signal t21" is the transmission optical signal t21 illustrated in Fig. 5 undergoing the first-stage transmission filtering processing with the band 4s21 as a set transmission band and the next-stage transmission filtering processing with the band 5s2 as a set transmission band.

Both signal strength of the transmission optical signal t21" in the neighborhood of the upper limit of the signal band and signal strength in the neighborhood of the lower limit are affected by the first-stage transmission filtering processing but are not affected by the next-stage transmission filtering processing. Accordingly, the signal strength of the transmission optical signal t21" in the neighborhood of the upper limit of the signal band and the signal strength in the neighborhood of the lower limit do not exhibit remarkable decrease due to being affected by both the first-stage transmission filtering processing and the next-stage transmission filtering processing. Accordingly, the signal band of the transmission optical signal t21" is not narrowed as is the case with the signal band of the transmission optical signal t21" illustrated in Fig. 6.

When the set transmission bands illustrated in Fig. 10 are set, none of edges of the set transmission bands related to the first-stage transmission filtering processing overlap any edge of the set transmission bands related to the next-stage transmission filtering processing. Accordingly, in this case, narrowing of a signal band, as is the case in the transmission optical signals tlm" and t21" illustrated in Fig. 7, does not occur.

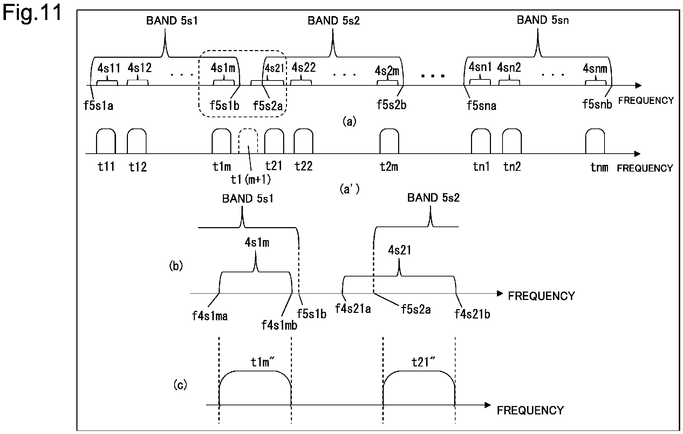

Fig. 11 is a diagram illustrating a third setting example of set transmission bands related to the first-stage transmission filtering processing and the next-stage transmission filtering processing, according to the second example embodiment. Diagram (a') in Fig. 11 illustrates the transmission optical signals t11 to tnm illustrated in Fig. 5. Diagram (b) in Fig. 11 is an enlarged view of a part enclosed by broken lines illustrated in Diagram (a) in Fig. 11. Diagram (c) in Fig. 8 is an image diagram illustrating transmission optical signals after undergoing the first-stage transmission filtering processing and the next-stage transmission filtering processing with set transmission bands illustrated in Diagram (b) in Fig. 8.

As illustrated in Diagram (a') in Fig. 11, the transmission optical signal t1m and the transmission optical signal t21 are not optical signals of channels adjoining each other, and a bandwidth not belonging to any channel exists between the two transmission optical signals. For example, as illustrated in Diagram (a') in Fig. 11, an empty channel not used in transmission of a transmission optical signal exists as the bandwidth. For the sake of description, the empty channel is illustrated as a channel of the transmission optical signal t1(m+1) in Diagram (a') in Fig. 11. The transmission optical signal t1(m+1) is an actually unused transmission optical signal and is an optical signal not input to the WSS_Band_MUX 106. A bandwidth of the empty channel is not limited to a case of being a bandwidth being identical to those of other reception optical signals as illustrated.

As illustrated in Diagrams (a) and (b) in Fig. 11, a frequency f4s1mb being the upper limit of the band 4s1m is set on the lower frequency side of a frequency f5s1b being the upper limit of the band 5s1. A frequency f4s21a being the lower limit of the band 4s21 is set on the lower frequency side of a frequency f5s2a being the lower limit of the band 5s2.

As illustrated in Diagram (a) in Fig. 11, the upper limit of the band 4s2m is set on the lower frequency side of a frequency f5s2b being the upper limit of the band 5s2. The lower limit of the band 4sn1 is set on the higher frequency side of a frequency f5sna being the lower limit of the band 5sn.

The same applies to other set transmission bands illustration of which is omitted in Diagram (a) in Fig. 11.

A frequency f5s1a being the lower limit of the band 5s1 is set on the lower frequency side of the lower limit of the band 4s11. A frequency f5snb being the upper limit of the band 5sn is set on the higher frequency side of the upper limit of the band 4snm.

An optical signal tlm" illustrated in Diagram (c) in Fig. 11 is the optical signal t1m illustrated in Fig. 5 undergoing the first-stage transmission filtering processing with the band 4s1m as a set transmission band and the next-stage transmission filtering processing with the band 5s1 as a set transmission band.

Both signal strength of the optical signal tlm" in the neighborhood of the upper limit of the signal band and signal strength in the neighborhood of the lower limit are affected by the first-stage transmission filtering processing but are not affected by the next-stage transmission filtering processing. Accordingly, the signal strength of the optical signal tlm" in the neighborhood of the upper limit of the signal band and the signal strength in the neighborhood of the lower limit do not exhibit remarkable decrease due to being affected by both the first-stage transmission filtering processing and the next-stage transmission filtering processing. Accordingly, the signal band of the optical signal tlm" is not narrowed as is the case with the signal band of the optical signal tlm" illustrated in Fig. 6.

A transmission optical signal t21" is the transmission optical signal t21 illustrated in Fig. 5 undergoing the first-stage transmission filtering processing with the band 4s21 as a set transmission band and the next-stage transmission filtering processing with the band 5s2 as a set transmission band.

Signal strength of the transmission optical signal t21" in the neighborhood of the upper limit of the signal band is affected by the first-stage transmission filtering processing but is not affected by the next-stage transmission filtering processing. Signal strength of the transmission optical signal t21" in the neighborhood of the lower limit of the signal band is affected by the next-stage transmission filtering processing but is not affected by the first-stage transmission filtering processing. Accordingly, the signal strength of the transmission optical signal t21" in the neighborhood of the upper limit of the signal band and the signal strength in the neighborhood of the lower limit do not exhibit remarkable decrease due to being affected by both the first-stage transmission filtering processing and the next-stage transmission filtering processing. Accordingly, the signal band of the transmission optical signal t21" is not narrowed as is the case with the signal band of the transmission optical signal t21" illustrated in Fig. 6.

When the set transmission bands illustrated in Fig. 11 are set, none of edges of the set transmission bands related to the first-stage transmission filtering processing overlap any edge of the set transmission bands related to the next-stage transmission filtering processing. Accordingly, in this case, narrowing of a signal band, as is the case in the transmission optical signals t1m" and t21" illustrated in Fig. 7, does not occur.

Next, an operation of reception filtering processing performed by the receiving-side optical transmission device 200 illustrated in Fig. 5 will be described by comparison between general set transmission bands and set transmission bands according to the second example embodiment.

First, the general case will be described.

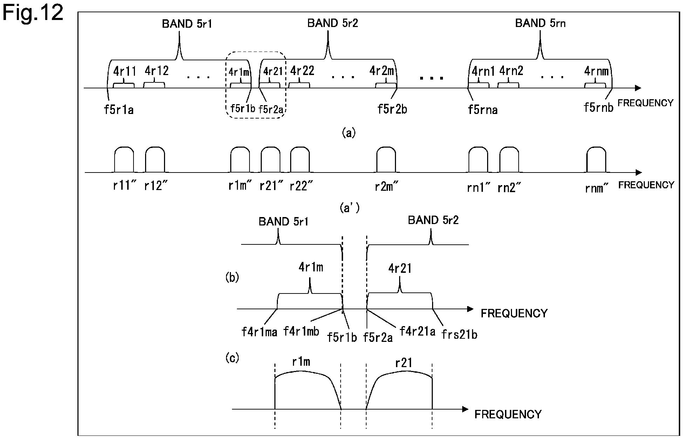

Fig. 12 is a conceptual diagram illustrating general set transmission bands related to the first-stage reception filtering processing and the next-stage reception filtering processing. Diagram (a') in Fig. 12 illustrates reception optical signals in the first-stage multiplexed reception optical signals. The transmission optical signals t11 to tnm illustrated in Fig. 5 are illustrated. Diagram (b) in Fig. 12 is an enlarged view of a part enclosed by broken lines illustrated in Diagram (a) in Fig. 12. Diagram (b) in Fig. 12 is an enlarged view of a part enclosed by broken lines illustrated in Diagram (a) in Fig. 8. Diagram (c) in Fig. 12 is an image diagram illustrating reception optical signals in the set transmission bands illustrated in Diagram (b) in Fig. 12 after undergoing the first-stage transmission filtering processing and the next-stage transmission filtering processing.

In the following description, each of bands 5r1 to 5rn is a set transmission band related to the first-stage reception filtering processing performed on each of the next-stage multiplexed reception optical signals. The next-stage multiplexed reception optical signal is acquired by demultiplexing the aforementioned first-stage multiplexed reception optical signal in the WSS_Band_DEMUX 206 illustrated in Fig. 5.

In the following description, each of bands 4r11 to 4r1m represents the set transmission band related to the aforementioned next-stage reception filtering processing. The next-stage reception filtering processing is performed on each reception optical signal acquired by demultiplexing the next-stage multiplexed reception optical signal in the WSS_CH_DEMUX 201. The same applies to bands 4r21 to 4r2m and bands 4rn1 to 4rnm.

As illustrated in Diagrams (a) and (b) in Fig. 12, a frequency f4rlmb being the upper limit of the band 4r1m roughly matches a frequency f5r1b being the upper limit of the band 5r1. A frequency f4r21a being the lower limit of the band 4r21 roughly matches a frequency f5r2a being the lower limit of the band 5r2.

As illustrated in Diagram (a) in Fig. 12, a frequency f5r2b being the upper limit of the band 5r2 roughly matches the upper limit of the band 4r2m. A frequency f5rna being the lower limit of the band 5rn roughly matches the lower limit of the band 4rn1.

The same applies to other set transmission bands illustration of which is omitted in Diagram (a) in Fig. 12.

A frequency f5rla being the lower limit of the band 5r1 is set on the lower frequency side of the lower limit of the band 4r11. A frequency f5rnb being the upper limit of the band 5rn is set on the higher frequency side of the band 4rnm.

A reception optical signal r1m illustrated in Diagram (c) in Fig. 12 is the reception optical signal r1m illustrated in Fig. 5 undergoing the first-stage transmission filtering processing with the band 4s1m as a set transmission band and the next-stage reception filtering processing with the band 5s1 as a set transmission band.

Signal strength of the reception optical signal r1m in the neighborhood of the upper limit of the signal band is remarkably decreased due to being affected by both the first-stage transmission filtering processing and the next-stage reception filtering processing. Consequently, the signal band of the reception optical signal r1m is narrowed.

A reception optical signal r21 is the reception optical signal r21 illustrated in Fig. 5 undergoing the first-stage transmission filtering processing with the band 4s21 as a set transmission band and the next-stage reception filtering processing with the band 5s2 as a set transmission band.

Signal strength of the reception optical signal r21 in the neighborhood of the lower limit of the signal band is remarkably decreased due to being affected by both the first-stage transmission filtering processing and the next-stage reception filtering processing. Consequently, the signal band of the reception optical signal r21 is narrowed.

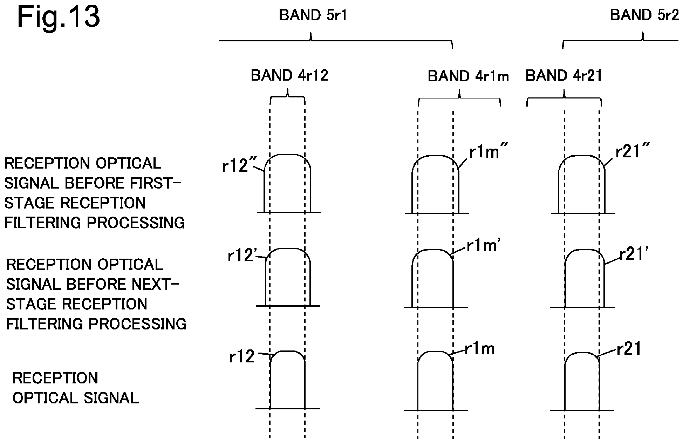

Fig. 13 is an image diagram illustrating signals in each stage after the reception filtering processing is performed when the set transmission bands illustrated in Fig. 12 are set in the receiving-side optical transmission device 200 illustrated in Fig. 5.

The horizontal axis of the signals illustrated in Fig. 13 represents frequency, and the vertical axis represents signal strength.

The signal band of a reception optical signal r12" before the first-stage reception filtering processing is included in the band 5r1. Accordingly, the reception optical signal r12" becomes a reception optical signal r12' having a signal band identical to the signal band of the reception optical signal r12", without being affected by the first-stage reception filtering processing with the band 5r1 as the set transmission band. The reception optical signal r12' is an optical signal multiplexed in the next-stage multiplexed reception optical signal.

The band 4r12 being a set transmission band related to the next-stage reception filtering processing is covered by a signal band of the reception optical signal r12'. Accordingly, the signal band of a reception optical signal r12" after the next-stage reception filtering processing becomes identical to the band 4r12.

The signal band upper limit of a reception optical signal r1m" is on the higher frequency side of the upper limit of the band 5r1 being a set transmission band related to the first-stage reception filtering processing. Accordingly, the signal band upper limit of a reception optical signal r1m' after the first-stage reception filtering processing becomes identical to the upper limit of the band 5r1.

On the other hand, the signal band lower limit of the reception optical signal r1m" is within the band 5r1. Accordingly, a shape of the reception optical signal r1m' after the first-stage reception filtering processing in the neighborhood of the signal band lower limit becomes identical to a shape of the reception optical signal r1m" in the neighborhood of the signal band lower limit.

The signal band upper limit of the reception optical signal r1m' is identical to the upper limit of the band 4r1m being a set transmission band related to the next-stage reception filtering processing. Accordingly, signal strength of a reception optical signal r1m after the next-stage reception filtering processing in the neighborhood of the signal band upper limit is remarkably decreased due an effect of the twofold filtering processing. Consequently, the reception optical signal r1m has a remarkably narrowed signal band compared with the reception optical signal r12.

On the other hand, the signal band lower limit of the reception optical signal r1m' is on the lower frequency side of the lower limit of the band 4rlm. Accordingly, the signal band lower limit of the reception optical signal r1m after the next-stage reception filtering processing becomes identical to the lower limit of the band 4r1m.

The signal band lower limit of a reception optical signal r21" is on the lower frequency side of the lower limit of the band 5r2 being a set transmission band related to the first-stage reception filtering processing. Accordingly, the lower limit of a reception optical signal r21' after the first-stage reception filtering processing becomes identical to the lower limit of the band 5r2.

On the other hand, the signal band upper limit of the reception optical signal r21" is within the band 5r2. Accordingly, a shape of the reception optical signal r21' after the first-stage reception filtering processing in the neighborhood of the signal band upper limit becomes identical to a shape of the reception optical signal r21" in the neighborhood of the signal band upper limit.

The signal band lower limit of the reception optical signal r21' is identical to the lower limit of the band 4r21 being a set transmission band related to the next-stage reception filtering processing. Accordingly, signal strength of a reception optical signal r21 after the next-stage reception filtering processing in the neighborhood of the signal band lower limit is remarkably decreased due to an effect of the twofold filtering processing. Consequently, the reception optical signal r21 has a remarkably narrowed signal band compared with the reception optical signal r12.

On the other hand, the signal band upper limit of the reception optical signal r21' is on the higher frequency side of the upper limit of the band 4r21. Accordingly, the signal band upper limit of the reception optical signal r21 after the next-stage reception filtering processing becomes identical to the upper limit of the band 4r21.

As described with reference to Fig. 13, when the set transmission bands illustrated in Fig. 6 are set, a signal band of a reception optical signal after the next-stage reception filtering processing may be remarkably narrowed.

Next, the case of the second example embodiment will be described.

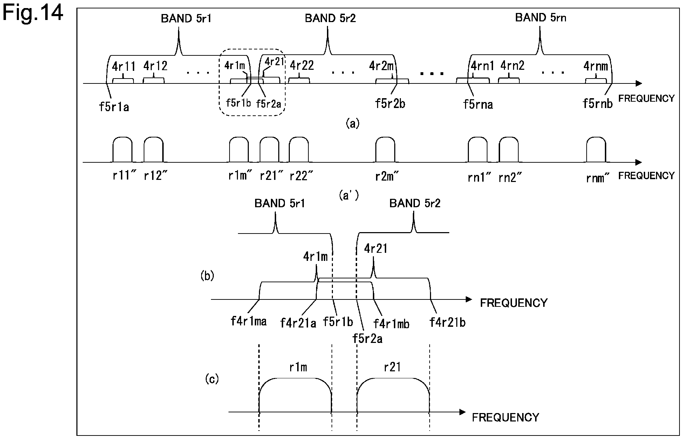

Fig. 14 is a diagram illustrating a first setting example of set transmission bands related to the first-stage reception filtering processing and the next-stage reception filtering processing, according to the second example embodiment. Diagram (a') in Fig. 14 illustrates reception optical signals in the first-stage multiplexed reception optical signals. Diagram (b) in Fig. 14 is an enlarged view of a part enclosed by broken lines illustrated in Diagram (a) in Fig. 14. Diagram (c) in Fig. 14 is an image diagram illustrating reception optical signals after undergoing the first-stage reception filtering processing and the next-stage reception filtering processing with set transmission bands illustrated in Diagram (b) in Fig. 14.

Each of bands 5r1 to 5rn illustrated in Diagram (a) in Fig. 14 is a set transmission band related to the first-stage reception filtering processing. The first-stage reception filtering processing is performed on each of the next-stage multiplexed reception optical signals acquired by demultiplexing the aforementioned first-stage multiplexed reception optical signal in the WSS_Band_DEMUX 206 illustrated in Fig. 5.

Each of bands 4r11 to 4r1m represents the set transmission band related to the aforementioned next-stage reception filtering processing performed on each reception optical signal acquired by demultiplexing the next-stage multiplexed reception optical signal in the WSS_CH_DEMUX 201. The same applies to bands 4r21 to 4r2m and bands 4rn1 to 4rnm.

As illustrated in Diagrams (a) and (b) in Fig. 14, a frequency f4rlmb being the upper limit of the band 4r1m is set on the higher frequency side of a frequency f5r1b being the upper limit of the band 5r1. A frequency f4r21a being the lower limit of the band 4r21 is set on the lower frequency side of a frequency f5r2a being the lower limit of the band 5r2.

As illustrated in Diagram (a) in Fig. 14, the upper limit of the band 4r2m is set on the higher frequency side of the upper limit of a frequency f5r2b being the upper limit of the band 5r2. The lower limit of the band 4rn1 is set on the lower frequency side of the lower limit of the band 5rn.

The same applies to other set transmission bands illustration of which is omitted in Diagram (a) in Fig. 14.

A frequency f5rla being the lower limit of the band 5r1 is set on the lower frequency side of the lower limit of the band 4r11. A frequency f5rnb being the upper limit of the band 5rn is set on the higher frequency side of the band 4rnm.

A reception optical signal r1m illustrated in Diagram (c) in Fig. 14 is the reception optical signal r1m illustrated in Fig. 5 undergoing the first-stage transmission filtering processing with the band 4s1m as a set transmission band and the next-stage reception filtering processing with the band 5s1 as a set transmission band.

Signal strength of the reception optical signal r1m in the neighborhood of the upper limit of the signal band is affected by the first-stage reception filtering processing but is not affected by the next-stage reception filtering processing. Signal strength of the reception optical signal r1m in the neighborhood of the lower limit of the signal band is affected by the next-stage reception filtering processing but is not affected by the first-stage reception filtering processing. Accordingly, the signal band of the reception optical signal r1m is not narrowed as is the case with the reception optical signal r1m illustrated in Fig. 12.

A reception optical signal r21 is the reception optical signal r21 illustrated in Fig. 5 undergoing the first-stage reception filtering processing with the band 4s21 as a set transmission band and the next-stage reception filtering processing with the band 5s2 as a set transmission band.

Signal strength of the reception optical signal r21 in the neighborhood of the lower limit of the signal band is affected by the first-stage reception filtering processing but is not affected by the next-stage reception filtering processing. Signal strength of the reception optical signal r21 in the neighborhood of the upper limit of the signal band is affected by the next-stage reception filtering processing but is not affected by the first-stage reception filtering processing. Accordingly, the signal band of the reception optical signal r21 is not narrowed as is the case with the reception optical signal r21 illustrated in Fig. 12.

When the set transmission bands illustrated in Fig. 14 are set, none of edges of the set transmission bands related to the first-stage reception filtering processing overlap any edge of the set transmission bands related to the next-stage reception filtering processing. Accordingly, in this case, narrowing of a signal band, as is the case in the reception optical signals r1m and r21 illustrated in Fig. 13, does not occur.

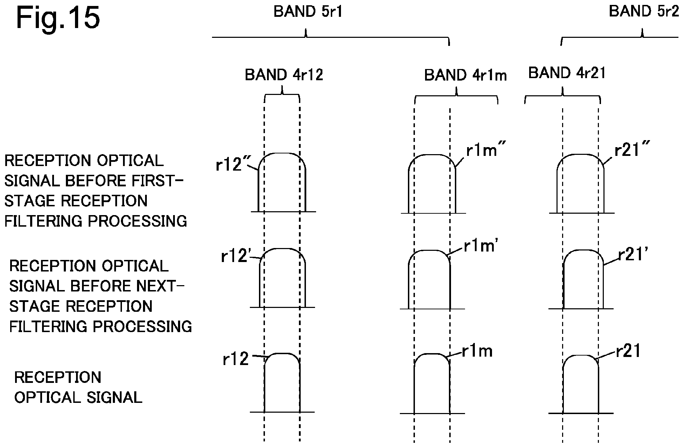

Fig. 15 is an image diagram illustrating signals in each stage after reception filtering processing when the set transmission band illustrated in Fig. 14 are set in the receiving-side optical transmission device 200 illustrated in Fig. 5.

The horizontal axis of the signals illustrated in Fig. 15 represents frequency, and the vertical axis represents signal strength.

The signal band of a reception optical signal r12" before the first-stage reception filtering processing is included in the band 5r1. Accordingly, the reception optical signal r12" is not affected by the first-stage reception filtering processing with the band 5r1 as the set transmission band. Accordingly, the signal band of a reception optical signal r12' after the first-stage reception filtering processing becomes identical to the signal band of the reception optical signal r12". The reception optical signal r12' is an optical signal multiplexed in the next-stage multiplexed reception optical signal.

The band 4r12 being a set transmission band related to the next-stage reception filtering processing is covered by the signal band of the reception optical signal r12'. Accordingly, the signal band of a reception optical signal r12 after the next-stage reception filtering processing becomes identical to the band 4r12.

The signal band upper limit of a reception optical signal r1m" is on the higher frequency side of the upper limit of the band 5r1 being a set transmission band related to the first-stage reception filtering processing. Accordingly, the signal band upper limit of a reception optical signal r1m' after the first-stage reception filtering processing becomes identical to the upper limit of the band 5r1.

On the other hand, the signal band lower limit of the reception optical signal r1m" is within the band 5r1. Accordingly, a shape of the reception optical signal r1m' after the first-stage reception filtering processing in the neighborhood of the signal band lower limit is identical to a shape of the reception optical signal r1m" in the neighborhood of the signal band lower limit.

The signal band lower limit of the reception optical signal r1m' is on the lower frequency side of the lower limit of the band 4rlm being a set transmission band related to the next-stage reception filtering processing. Accordingly, the signal band lower limit of a reception optical signal r1m after the next-stage reception filtering processing becomes identical to the lower limit of the band 4r1m.

On the other hand, the signal band upper limit of the reception optical signal r1m" is on the higher frequency side of the upper limit of the band 5r1. Accordingly, the signal band upper limit of the reception optical signal r1m' after the first-stage reception filtering processing becomes identical to the band 5r1.

The signal band upper limit of the reception optical signal r1m' is within the band 4r1m. Accordingly, a shape of the reception optical signal r1m after the next-stage reception filtering processing in the neighborhood of the signal band upper limit becomes identical to a shape of the reception optical signal r1m' in the neighborhood of the signal band upper limit.

Thus, the signal band of the reception optical signal r1m after the next-stage reception filtering processing is set by the lower limit of the band 4r1m and the upper limit of the band 5r1. Further, the neighborhood of the lower limit of the signal band of the reception optical signal r1m is affected by the next-stage reception filtering processing but is not affected by the first-stage reception filtering processing. Accordingly, remarkable narrowing of a signal band due to being affected twofold by the first-stage reception filtering processing and the next-stage reception filtering processing, as is the case in the reception optical signal r1m illustrated in Fig. 13, does not occur in the neighborhood of the upper limit of the signal band of the reception optical signal r1m.

The signal band lower limit of a reception optical signal r21" is on the lower frequency side of the lower limit of the band 5r2 being a set transmission band related to the first-stage reception filtering processing. Accordingly, the lower limit of a reception optical signal r21' after first-stage reception filtering processing becomes identical to the lower limit of the band 5r2.

On the other hand, the signal band upper limit of the reception optical signal r21 is within the band 5r2. Accordingly, a shape of the reception optical signal r21' after the first-stage reception filtering processing in the neighborhood of the signal band upper limit becomes identical to a shape of the reception optical signal r21" in the neighborhood of the signal band upper limit.

The signal band lower limit of the reception optical signal r21' is within the band 4r21 being a set transmission band related to the next-stage reception filtering processing. Accordingly, a shape of the reception optical signal r21 after the next-stage reception filtering processing in the neighborhood of the signal band lower limit becomes identical to a shape of the reception optical signal r21' in the neighborhood of the signal band lower limit.

On the other hand, the signal band upper limit of the reception optical signal r21' is on the higher frequency side of the upper limit of the band 4r21. Accordingly, the signal band upper limit of the reception optical signal after the next-stage reception filtering processing r21 becomes identical to the upper limit of the band 4r21.

Thus, the signal band of the reception optical signal r21 after the next-stage reception filtering processing is set by the upper limit of the band 4r21 and the lower limit of the band 5r2. Further, the neighborhood of the lower limit of the signal band of the reception optical signal r21 is affected by the next-stage reception filtering processing but is not affected by the first-stage reception filtering processing. Accordingly, remarkable narrowing of a signal band due to being affected twofold by the first-stage reception filtering processing and the next-stage reception filtering processing, as is the case in the reception optical signal r21 illustrated in Fig. 13, does not occur in the neighborhood of the upper limit of the signal band of the reception optical signal r21.

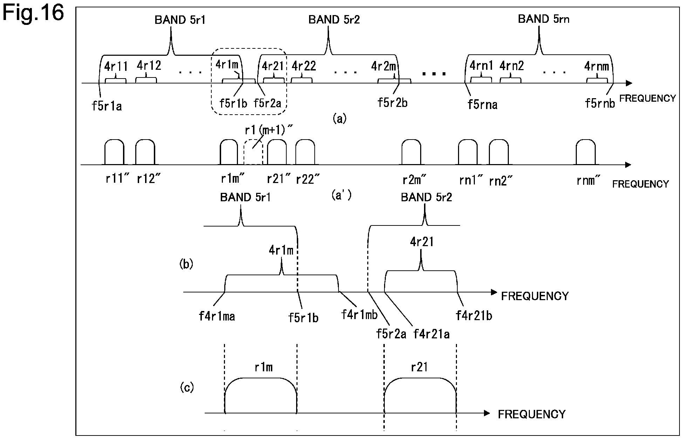

Fig. 16 is a conceptual diagram illustrating a second setting example of set transmission bands related to the first-stage reception filtering processing and the next-stage reception filtering processing, according to the present example embodiment. Diagram (a') in Fig. 16 illustrates reception optical signals in the first-stage multiplexed reception optical signals. Diagram (b) in Fig. 16 is an enlarged view of a part enclosed by broken lines illustrated in Diagram (a) in Fig. 16. Diagram (c) in Fig. 16 is an image diagram illustrating reception optical signals after undergoing the first-stage transmission filtering processing and the next-stage reception filtering processing with set transmission bands illustrated in Diagram (b) in Fig. 16.

As illustrated in Diagram (a') in Fig. 16, a reception optical signal r1m" and a reception optical signal r21" are not optical signals of channels adjoining each other, and a bandwidth not belonging to any channel exists between the two reception optical signals. For example, as illustrated in Diagram (a') in Fig. 16, an empty channel not used in reception of a reception optical signal exists as the bandwidth. For the sake of description, the empty channel is illustrated as a channel of a reception optical signal r1(m+1)" in Diagram (a') in Fig. 16. The reception optical signal r1(m+1)" is an actually unused reception optical signal and is a reception optical signal not output from the WSS_CH_DEMUXes. A bandwidth of the empty channel is not limited to a case of a bandwidth being identical to those of other reception optical signals as illustrated.

Each of bands 5r1 to 5rn illustrated in Diagram (a) in Fig. 16 is a set transmission band related to the first-stage reception filtering processing. The first-stage reception filtering processing is performed on each of the next-stage multiplexed reception optical signals acquired by demultiplexing the aforementioned first-stage multiplexed reception optical signal in the WSS_Band_DEMUX 206 illustrated in Fig. 5.

Each of bands 4r11 to 4rlm represents the set transmission band related to the aforementioned next-stage reception filtering processing performed on each of reception optical signals acquired by demultiplexing the next-stage multiplexed reception optical signal in the WSS_CH_DEMUX 201. The same applies to bands 4r21 to 4r2m and bands 4rn1 to 4rnm.

As illustrated in Diagrams (a) and (b) in Fig. 16, a frequency f4r1mb being a frequency on the edge of the higher frequency side of the band 4rlm is set on the higher frequency side of a frequency f5rlb being the upper limit of the band 5r1. A frequency f4r21a being the lower limit of the band 4r21 is set within the band 5r2.

As illustrated in Diagram (a) in Fig. 16, the upper limit of the band 4r2m is set on the higher frequency side of a frequency f5r2b being the upper limit of the band 5r2. The lower limit of the band 4rn1 is set within the band 5rn.

The same applies to other set transmission bands illustration of which is omitted in Diagram (a) in Fig. 16.

A frequency f5rla being the lower limit of the band 5r1 is set on the lower frequency side of the lower limit of the band 4r11. A frequency f5rnb being the upper limit of the band 5rn is set on the higher frequency side of the band 4rnm.

A reception optical signal r1m illustrated in Diagram (c) in Fig. 16 is the reception optical signal r1m illustrated in Fig. 5 undergoing the first-stage transmission filtering processing with the band 4s1m as a set transmission band and the next-stage reception filtering processing with the band 5s1 as a set transmission band.

Signal strength of the reception optical signal r1m in the neighborhood of the upper limit of the signal band is affected by the first-stage reception filtering processing but is not affected by the next-stage reception filtering processing. Signal strength of the reception optical signal r1m in the neighborhood of the lower limit of the signal band is affected by the next-stage reception filtering processing but is not affected by the first-stage reception filtering processing. Accordingly, the signal band of the reception optical signal r1m is not narrowed as is the case with the reception optical signal r1m illustrated in Fig. 12.

A reception optical signal r21 is the reception optical signal r21 illustrated in Fig. 5 undergoing the first-stage reception filtering processing with the band 4s21 as a set transmission band and the next-stage reception filtering processing with the band 5s2 as a set transmission band.

Both signal strength of the reception optical signal r21 in the neighborhood of the lower limit of the signal band and signal strength in the neighborhood of the upper limit are affected by the next-stage reception filtering processing but are not affected by the first-stage reception filtering processing. Accordingly, the signal band of the reception optical signal r21 is not narrowed as is the case with the reception optical signal r21 illustrated in Fig. 12.

When the set transmission bands illustrated in Fig. 16 are set, none of edges of the set transmission bands related to the first-stage reception filtering processing overlap any edge of the set transmission bands related to the next-stage reception filtering processing. Accordingly, in this case, narrowing of a signal band, as is the case in the reception optical signals r1m and r21 illustrated in Fig. 13, does not occur.

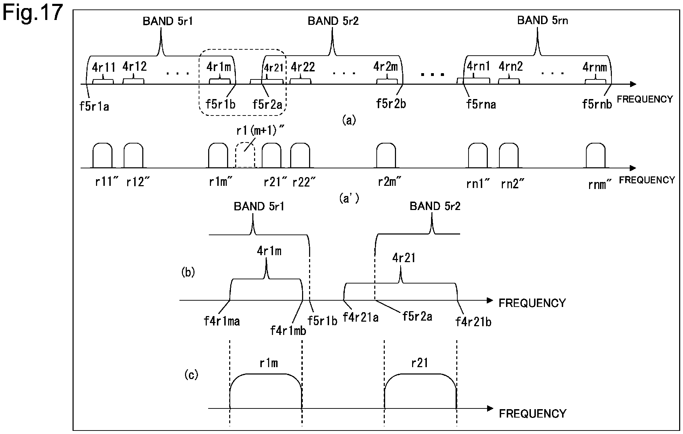

Fig. 17 is a diagram illustrating a third setting example of set transmission bands related to the first-stage reception filtering processing and the next-stage reception filtering processing, according to the present example embodiment. Diagram (a') in Fig. 17 illustrates reception optical signals in the first-stage multiplexed reception optical signals. Diagram (b) in Fig. 17 is an enlarged view of a part enclosed by broken lines illustrated in Diagram (a) in Fig. 17. Diagram (c) in Fig. 12 is an image diagram illustrating reception optical signals after undergoing the first-stage reception filtering processing and the next-stage reception filtering processing with set transmission bands illustrated in Diagram (b) in Fig. 12.

As illustrated in Diagram (a') in Fig. 17, a reception optical signal r1m" and a reception optical signal r21" are not optical signals of channels adjoining each other, and a bandwidth not belonging to any channel exists between the two reception optical signals. For example, as illustrated in Diagram (a') in Fig. 17, an empty channel not used in reception of a reception optical signal exists as the bandwidth. For the sake of description, the empty channel is illustrated as a channel of a reception optical signal r1(m+1)" in Diagram (a') in Fig. 17. The reception optical signal r1(m+1)" is an actually unused reception optical signal and is a reception optical signal not output from the WSS_CH_DEMUXes. A bandwidth of the empty channel is not limited to a case of a bandwidth being identical to those of other reception optical signals as illustrated.

Each of bands 5r1 to 5rn illustrated in Diagram (a) in Fig. 17 is a set transmission band related to the first-stage reception filtering processing. The first-stage reception filtering processing is performed on each of the next-stage multiplexed reception optical signals acquired by demultiplexing the aforementioned first-stage multiplexed reception optical signal in the WSS_Band_DEMUX 206 illustrated in Fig. 5.

Each of bands 4r11 to 4rlm represents the set transmission band related to the aforementioned next-stage reception filtering processing performed on each reception optical signal acquired by demultiplexing the next-stage multiplexed reception optical signal in the WSS_CH_DEMUX 201. The same applies to bands 4r21 to 4r2m and bands 4rn1 to 4rnm.

As illustrated in Diagrams (a) and (b) in Fig. 17, a frequency f4rlmb being the upper limit of the band 4rlm is set within the band 5r1. A frequency f4r21a being the lower limit of the band 4r21 is set on the lower frequency side of a frequency f5r2a being the lower limit of the band 5r2.

As illustrated in Diagram (a) in Fig. 17, the upper limit of the band 4r2m is set within the band 5r2. The lower limit of the band 4rn1 is set on the lower frequency side of a frequency f5rna being the lower limit of the band 5rn.

The same applies to other set transmission bands illustration of which is omitted in Diagram (a) in Fig. 17.

A frequency f5rla being the lower limit of the band 5r1 is set on the lower frequency side of the lower limit of the band 4r11. A frequency f5rnb being the upper limit of the band 5rn is set on the higher frequency side of the upper limit of the band 4rnm.

A reception optical signal r1m illustrated in Diagram (c) in Fig. 17 is the reception optical signal r1m illustrated in Fig. 5 undergoing the first-stage transmission filtering processing with the band 4s1m as a set transmission band and the next-stage reception filtering processing with the band 5s1 as a set transmission band.

Both signal strength of the reception optical signal r1m in the neighborhood of the upper limit of the signal band and signal strength in the neighborhood of the lower limit are affected by the next-stage reception filtering processing but are not affected by the first-stage reception filtering processing. Accordingly, the signal band of the reception optical signal r1m is not narrowed as is the case with the reception optical signal r1m illustrated in Fig. 12.

A reception optical signal r21 is the reception optical signal r21 illustrated in Fig. 5 undergoing the first-stage reception filtering processing with the band 4s21 as a set transmission band and the next-stage reception filtering processing with the band 5s2 as a set transmission band.

Signal strength of the reception optical signal r21 in the neighborhood of the lower limit of the signal band is affected by the next-stage reception filtering processing but is not affected by the first-stage reception filtering processing. Signal strength of the reception optical signal r21 in the neighborhood of the upper limit of the signal band is affected by the next-stage reception filtering processing but is not affected by the first-stage reception filtering processing. Accordingly, the signal band of the reception optical signal r21 is not narrowed as is the case with the reception optical signal r21 illustrated in Fig. 12.

When the set transmission bands illustrated in Fig. 17 are set, none of edges of the set transmission bands related to the first-stage reception filtering processing overlap any edge of the set transmission bands related to the next-stage reception filtering processing. Accordingly, in this case, narrowing of a signal band, as is the case in the reception optical signals r1m and r21 illustrated in Fig. 13, does not occur.

Three-or-more-stage transmission filtering processing may be performed on transmission optical signals in the optical transmission device for transmission. In that case, edges of set transmission bands related to transmission filtering processing in every stage are set in such a way as not to overlap one another.

Further, while a case of the receiving-side optical transmission device being an optical transmission device for reception including a two-stage optical demultiplexing device has been described in the above description, the optical transmission device for reception may include a three-or-more-stage optical demultiplexing device.

Further, three-or-more-stage transmission filtering processing may be performed on reception optical signals in the optical transmission device for reception. In that case, edges of set transmission bands related to reception filtering processing in every stage are set in such a way as not to overlap one another.

### Effects

In each of the transmitting-side optical transmission device and the receiving-side optical transmission device included in the optical communication system according to the present example embodiment, all edges of set transmission bands related to multistage filtering processing of optical signals are set in such a way as not to overlap one another. Accordingly, the optical communication system may suppress remarkable decrease in signal strength of an optical signal at a frequency in the neighborhood of overlapping edges, the decrease being caused by overlapping of edges of set transmission bands related to multistage filtering processing. Accordingly, the optical communication system may suppress narrowing of a signal band of the optical signal accompanying the decrease in signal strength.

### Third Example Embodiment

A third example embodiment is an example embodiment related to an optical communication system automatically setting edges of set transmission bands related to multistage filtering processing of optical signals in such a way that the edges do not overlap one another. Configuration and Operation

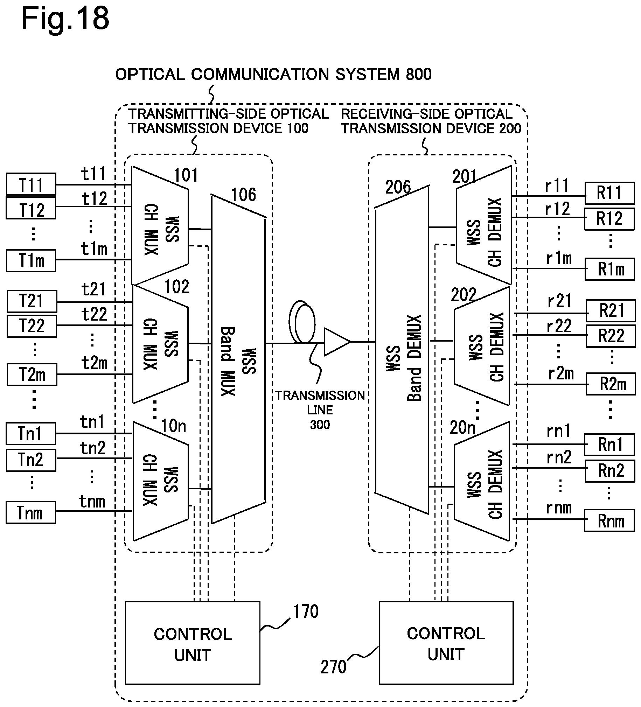

Fig. 18 is a conceptual diagram illustrating a configuration of an optical communication system 800 being an example of an optical communication system according to the third example embodiment.

A description of the optical communication system 800 illustrated in Fig. 18 is the same as the description of the optical communication system 800 illustrated in Fig. 5 except for the following description. When the following description is inconsistent with the description of the second example embodiment, the following description has priority.

In addition to the configuration illustrated in Fig. 5, the optical communication system 800 illustrated in Fig. 18 includes control units 170 and 270.

The control unit 170 acquires information indicating set transmission bands related to each stage of transmission filtering processing from each of WSS_CH_MUXes 101 to 10n (first-stage transmission WSSs) and a WSS_Band_MUX 106 (next-stage transmission WSS). Then, the control unit 170 extracts an edge of a set transmission band related to the first-stage transmission filtering processing and an edge of a set transmission band related to the next-stage transmission filtering processing overlapping each other. Then, when extracting overlapping edges, the control unit 170 transmits control information instructing widening of a set transmission band including the edge to a first-stage transmission WSS performing the first-stage transmission filtering processing on the set transmission band.

When the extracted edge of the set transmission band related to the first-stage transmission filtering processing is related to the upper limit of the set transmission band, the widening is widening of the upper limit of the set transmission band toward the higher frequency side.

When the extracted edge of the set transmission band related to the first-stage transmission filtering processing is related to the lower limit of the set transmission band, the widening is widening of the lower limit of the set transmission band toward the lower frequency side.

The first-stage transmission WSS receiving the transmission of the control information widens the set transmission band related to the first-stage transmission filtering processing in accordance with the control information.

On the other hand, the control unit 270 acquires information indicating set transmission bands related to each stage of reception filtering processing from a WSS_Band_DEMUX 206 (first-stage reception WSS) and each of WSS_CH_DEMUXes 201 to 20n (next-stage reception WSSs). Then, the control unit 270 extracts an edge of a set transmission band related to the first-stage reception filtering processing and an edge of a set transmission band related to the next-stage reception filtering processing overlapping each other. Then, when extracting overlapping edges, the control unit 120 transmits control information instructing widening of a set transmission band including the edge to a next-stage reception WSS performing the next-stage reception filtering processing on the set transmission band.

When the extracted edge of the set transmission band related to the next-stage reception filtering processing is related to the upper limit of the set transmission band, the widening is widening of the upper limit of the set transmission band toward the higher frequency side.

When the extracted edge of the set transmission band related to the next-stage reception filtering processing is related to the lower limit of the set transmission band, the widening is widening of the lower limit of the set transmission band toward the lower frequency side.

The next-stage reception WSS receiving the transmission of the control information widens the set transmission band related to the next-stage reception filtering processing in accordance with the control information.

### Processing Flow Example

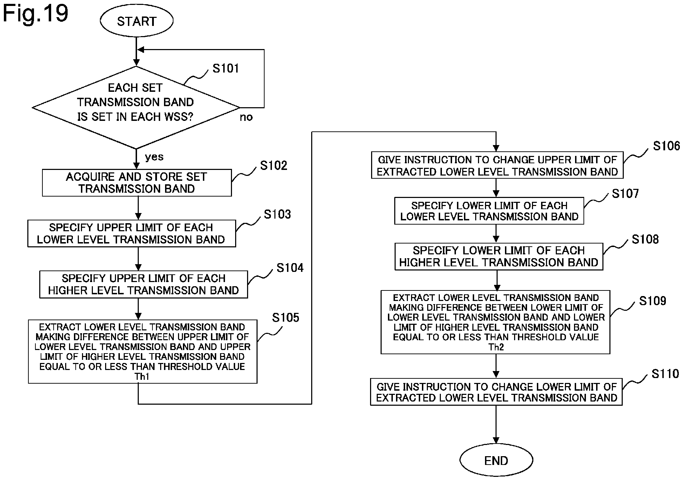

Fig. 19 is a conceptual diagram illustrating a processing flow of processing performed by either one of the control units 170 and 270 (hereinafter simply referred to as a "control unit").

For example, the control unit starts the processing illustrated in Fig. 19 by external input of start information.

Then, as processing in S101, the control unit determines whether a transmission band of each filter is set in each WSS included in a target optical transmission device (a transmitting-side optical transmission device 100 or a receiving-side optical transmission device 200). The control unit makes the determination by, for example, acquiring setting completion information from each WSS.

When the determination result by the processing in S101 is yes, the control unit performs processing in S102.

On the other hand, when the determination result by the processing in S101 is no, the control unit performs the processing in S101 again.

When performing the processing in S102, the control unit acquires and stores every set transmission band set in each WSS included in the target optical transmission device, as the processing.

Then, as processing in S103, the control unit specifies the upper limit of each lower level transmission band included in the target optical transmission device. The lower level transmission band refers to a set transmission band related to filtering processing in the first-stage transmission WSS or the next-stage reception WSS.

Then, as processing in S104, the control unit specifies the upper limit of each lower level transmission band. The higher level transmission band refers to a set transmission band related to filtering processing in the next-stage transmission WSS or the first-stage reception WSS.

Then, as processing in S105, the control unit extracts a lower level transmission band making the difference between the upper limit of the lower level transmission band specified by the processing in S103 and the upper limit of the higher level transmission band specified by the processing in S104 equal to or less than a threshold value Th1. The threshold value Th1 is a threshold value predetermined under an assumption that two upper limits match when the difference between the two upper limits is equal to or less than the threshold value Th1.

Then, the control unit instructs each lower level WSS performing filtering processing related to each lower level transmission band extracted by the processing in S105 to change the upper limit of the relating lower level transmission band to a higher frequency value. The lower level WSS receiving the instruction changes the upper limit of the target lower level transmission band in accordance with the instruction.

Then, as processing in S107, the control unit specifies the lower limit of each lower level transmission band included in the target optical transmission device.

Then, as processing in S108, the control unit specifies the lower limit of each higher level transmission band.

Then, as processing in S109, the control unit extracts a lower level transmission band making the difference between the lower limit of the lower level transmission band specified by the processing in S107 and the lower limit of the higher level transmission band specified by the processing in S108 equal to or less than a threshold value Th2. The threshold value Th2 is a threshold value predetermined under an assumption that two lower limits match when the difference between the two lower limits is equal to or less than the threshold value Th2.

Then, the control unit instructs each lower level WSS performing filtering processing related to each lower level transmission band extracted by the processing in S110 to change the lower limit of the relating lower level transmission band to a lower frequency value. The lower level WSS receiving the instruction changes the lower limit of the target lower level transmission band in accordance with the instruction.

Then, the control unit ends the processing illustrated in Fig. 19.

### Effects

The optical communication system according to the third example embodiment has a configuration similar to that of the optical communication system according to the second example embodiment and provides effects similar to those of the optical communication system according to the second example embodiment.

In addition, the third example embodiment may enable automatic setting of set transmission bands for providing the aforementioned effects.

### Fourth Example Embodiment

A fourth example embodiment is an example embodiment related to an optical transmission device adjusting set transmission bands in each WSS by monitoring the aforementioned next-stage transmission optical multiplexed signal.

### Configuration and Operation

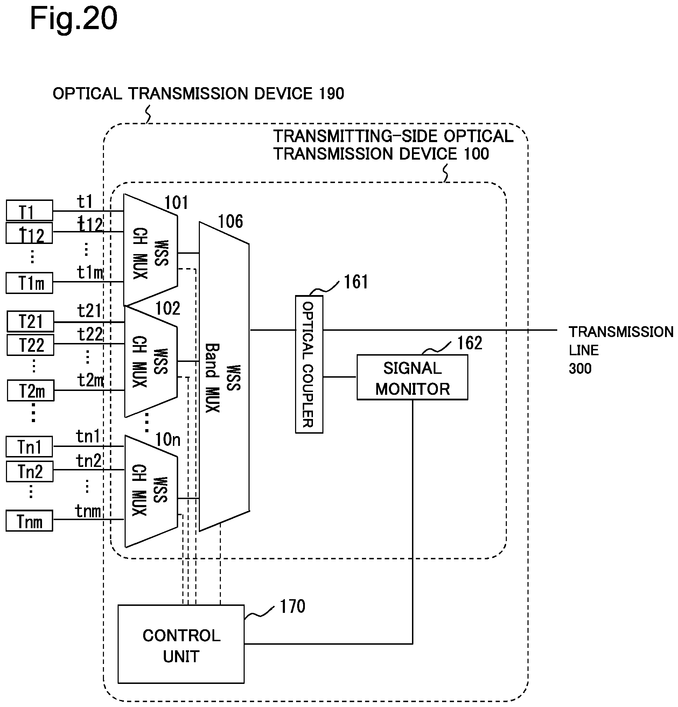

Fig. 20 is a conceptual diagram illustrating a configuration of an optical transmission device 190 being an example of an optical transmission device according to the fourth example embodiment.

The optical transmission device 190 includes a transmitting-side optical transmission device 100 and a control unit 170.

In addition to the configuration of the transmitting-side optical transmission device 100 illustrated in Fig. 18, the transmitting-side optical transmission device 100 includes an optical coupler 161 and a signal monitor 162.

The optical coupler 161 splits part of the aforementioned next-stage transmission multiplexed optical signal transmitted from a WSS_Band_MUX 106 to a transmission line 300 and inputs the split signal to the signal monitor 162.

For example, the signal monitor 162 is an optical channel monitor (OCM).

The signal monitor 162 measures a frequency characteristic of signal strength of a next-stage multiplexed transmission optical signal input from the optical coupler 161. Then, the signal monitor 162 inputs information indicating the measured frequency characteristic to the control unit 170.

From the information input from the signal monitor 162, the control unit 170 specifies an upper limit or a lower limit of a set transmission band related to the first-stage transmission filtering processing to be changed.

Then, the control unit 170 transmits, to a lower level WSS relating to the specified upper limit or lower limit, a control signal instructing change of the upper limit or the lower limit of the set transmission band. A lower level WSS is each of WSS_CH_MUXes 101 to 10n illustrated in Fig. 20. A frequency band for each channel is allocated to each lower level WSS.

The optical transmission device 190 may be configured as an OCI.

A description of the transmitting-side optical transmission device 100 and the control unit 170 illustrated in Fig. 20 is the same as the description of the transmitting-side optical transmission device 100 and the control unit 170 illustrated in Fig. 18 except for the above description. When the above description is inconsistent with the description of the third example embodiment, the above description has priority.

### Effects

The optical transmission device according to the fourth example embodiment monitors a frequency characteristic of the next-stage multiplexed transmission optical signal. Then, from the monitored characteristic, the optical transmission device specifies an upper limit or a lower limit to be changed out of upper limits and lower limits of set transmission bands related to the first-stage reception filtering processing and causes a relating lower level WSS to change the upper limit or the lower limit. Accordingly, for example, even when the control unit does not acquire channel information indicating a set transmission band related to the first-stage reception filtering processing in each lower level WSS from each transmission unit, the optical transmission device may adjust the set transmission band by monitoring the next-stage multiplexed transmission optical signal.

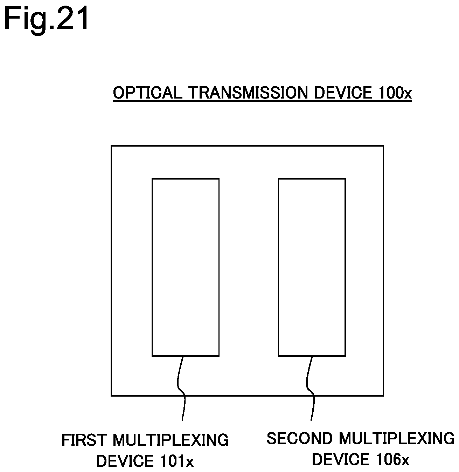

Fig. 21 is a block diagram illustrating an optical transmission device 100x being a minimum configuration of the optical transmission device according to the example embodiments.

The optical transmission device 100x includes a first multiplexing device 101x and a second multiplexing device 106x.

The first multiplexing device 101x outputs a first wavelength multiplexed signal acquired by multiplexing first processed signals acquired by performing first filtering processing on input transmission optical signals.

The second multiplexing device 106x outputs a second wavelength multiplexed signal acquired by multiplexing the first wavelength multiplexed signals undergoing second filtering processing.

The upper limit and the lower limit of each first transmission band being a transmission band related to each operation of the first filtering processing are respectively different from the upper limit and the lower limit of each second transmission band being a transmission band related to each operation of the second filtering processing.

In the optical transmission device 100x, none of the upper limits and the lower limits of the set transmission bands related to the first filtering processing overlap any of the upper limits and the lower limits of the set transmission bands related to the next-stage transmission filtering processing. Accordingly, every upper limit and upper limit of a signal band of a transmission optical signal included in a multiplexed transmission optical signal output from the optical transmission device is determined by either the first filtering processing or the second filtering processing. In other words, none of the upper limits and the lower limits are affected by twofold filtering processing by the first filtering processing and the second filtering processing. Accordingly, the optical transmission device may suppress narrowing of a signal band of a transmission optical signal due to the twofold filtering processing.

Accordingly, with the above configuration, the optical transmission device 100x provides the effect described in the Advantageous Effects of Invention section.

While the example embodiments of the present invention have been described above, the present invention is not limited to the aforementioned example embodiments, and further modification, substitution, and/or adjustment can be made within the basic technological concept of the present invention. For example, configurations of components illustrated in the drawings are examples for assisting understanding of the present invention, and are not limited to the configurations illustrated in the drawings.

The whole or part of the example embodiments disclosed above can be described as, but not limited to, the following supplementary notes.
Supplementary Note 1
   An optical transmission device including:
   a first multiplexing device configured to output a first wavelength multiplexed signal acquired by multiplexing each of one or more first processed signals acquired by performing first filtering processing on each of one or more input transmission optical signals; and
   a second multiplexing device configured to output a second wavelength multiplexed signal acquired by multiplexing each of one or more of the first wavelength multiplexed signals undergoing second filtering processing, wherein
   an upper limit and a lower limit of each of one or more first transmission bands being a transmission band related to each operation of the first filtering processing are respectively different from an upper limit and a lower limit of each of one or more second transmission bands being a transmission band related to each operation of the second filtering processing.
Supplementary Note 2
   The optical transmission device according to Supplementary Note 1, wherein
   the second transmission band includes a transmission band part shared with the first transmission band.
Supplementary Note 3
   The optical transmission device according to Supplementary Note 1 or 2, further including
   a transmitter performing the input.
Supplementary Note 4
   The optical transmission device according to any one of Supplementary Notes 1 to 3, wherein
   an upper limit of the first transmission band with a highest frequency out of the first transmission bands included in the second transmission band is higher than an upper limit of the second transmission band.
Supplementary Note 5
   The optical transmission device according to Supplementary Note 1 or 2, wherein
   an upper limit of the first transmission band with a highest frequency out of the first transmission bands included in the second transmission band with a lower frequency out of two of the second transmission bands frequencies of which are close to each other is higher than an upper limit of the second transmission band.
Supplementary Note 6
   The optical transmission device according to any one of Supplementary Notes 1 to 5, wherein
   a lower limit of the first transmission band with a lowest frequency out of the first transmission bands included in the second transmission band is lower than a lower limit of the second transmission band.
Supplementary Note 7
   The optical transmission device according to any one of Supplementary Notes 1 to 5, wherein
   a lower limit of the first transmission band with a lowest frequency out of the first transmission bands included in the second transmission band with a higher frequency out of two of the second transmission bands frequencies of which are close to each other is lower than a lower limit of the second transmission band.
Supplementary Note 8
   An optical transmission device including:
   a first multiplexing device configured to output a first wavelength multiplexed signal acquired by multiplexing each of one or more first processed signals acquired by performing first filtering processing on each of one or more input transmission optical signals;
   a second multiplexing device configured to output a second wavelength multiplexed signal acquired by multiplexing each of one or more of the first wavelength multiplexed signals undergoing second filtering processing; and
   a setting unit configured to set an upper limit and a lower limit of each of one or more first transmission bands being a transmission band related to each operation of the first filtering processing, in such a way that the upper limit and the lower limit are respectively different from an upper limit and a lower limit of each of one or more second transmission bands being a transmission band related to each operation of the second filtering processing.
Supplementary Note 9
   An optical reception device configured to receive the second wavelength multiplexed signal transmitted by the transmission device according to any one of Supplementary Notes 1 to 8 as a first reception wavelength multiplexed signal.
Supplementary Note 10
   The optical reception device according to Supplementary Note 9, including:
   a first demultiplexing device configured to output a second reception wavelength multiplexed signal acquired by performing third filtering processing on each of one or more first demultiplexed signals acquired by demultiplexing the first reception wavelength multiplexed signal; and
   a second demultiplexing device configured to output a reception optical signal acquired by performing fourth filtering processing on a second demultiplexed signal acquired by demultiplexing the second reception wavelength multiplexed signal, wherein
   an upper limit and a lower limit of each of one or more third transmission bands being a transmission band related to each operation of the third filtering processing are respectively different from an upper limit and a lower limit of each of one or more fourth transmission bands being a transmission band related to each operation of the fourth filtering processing.
Supplementary Note 11
   The optical reception device according to Supplementary Note 10, further including
   a receiver configured to receive the reception optical signal.
Supplementary Note 12
   The optical reception device according to Supplementary Note 11, wherein
   an upper limit of the fourth transmission band with a highest frequency out of the fourth transmission bands included in the third transmission band is higher than an upper limit of the third transmission band.
Supplementary Note 13
   The optical reception device according to Supplementary Note 11, wherein
   an upper limit of the fourth transmission band with a highest frequency out of the fourth transmission bands included in the third transmission band with a lower frequency out of two of the third transmission bands frequencies of which are close to each other is higher than an upper limit of the third transmission band.
Supplementary Note 14
   The optical reception device according to any one of Supplementary Notes 10 to 13, wherein
   a lower limit of the fourth transmission band with a lowest frequency out of the fourth transmission bands included in the third transmission band is lower than a lower limit of the third transmission band.
Supplementary Note 15
   The optical reception device according to any one of Supplementary Notes 10 to 13, wherein
   a lower limit of the fourth transmission band with a lowest frequency out of the fourth transmission bands included in the third transmission band with a higher frequency out of two of the third transmission bands frequencies of which are close to each other is lower than a lower limit of the third transmission band.
Supplementary Note 16
   The optical reception device according to Supplementary Note 9, including:
   a first demultiplexing device configured to output a second reception wavelength multiplexed signal acquired by performing third filtering processing on each of one or more first demultiplexed signals acquired by demultiplexing the first reception wavelength multiplexed signal;
   a second demultiplexing device configured to output a reception optical signal acquired by performing fourth filtering processing on a second demultiplexed signal acquired by demultiplexing the second reception wavelength multiplexed signal; and
   a second setting unit configured to set an upper limit and a lower limit of each of one or more third transmission bands being a transmission band related to each operation of the third filtering processing, in such a way that the upper limit and the lower limit are respectively different from an upper limit and a lower limit of each of one or more fourth transmission bands being a transmission band related to each operation of the fourth filtering processing.
Supplementary Note 17
   An optical communication system including:
   the optical reception device according to any one of Supplementary Notes 9 to 16; and
   the transmission device.
Supplementary Note 18 An optical transmission method including:
   outputting a first wavelength multiplexed signal acquired by multiplexing each of one or more first processed signals acquired by performing first filtering processing on each of one or more input transmission optical signals; and
   outputting a second wavelength multiplexed signal acquired by multiplexing each of one or more of the first wavelength multiplexed signals undergoing second filtering processing, wherein
   an upper limit and a lower limit of each of one or more first transmission bands being a transmission band related to each operation of the first filtering processing are respectively different from an upper limit and a lower limit of each of one or more second transmission bands being a transmission band related to each operation of the second filtering processing.
Supplementary Note 19
   An optical reception method including:
   outputting a second reception wavelength multiplexed signal acquired by performing third filtering processing on each of one or more first demultiplexed signals acquired by demultiplexing a received first reception wavelength multiplexed signal; and
   outputting a reception optical signal acquired by performing fourth filtering processing on a second demultiplexed signal acquired by demultiplexing the second reception wavelength multiplexed signal, wherein
   an upper limit and a lower limit of each of one or more third transmission bands being a transmission band related to each operation of the third filtering processing are respectively different from an upper limit and a lower limit of each of one or more fourth transmission bands being a transmission band related to each operation of the fourth filtering processing.
Supplementary Note 20
   A setting method including
   setting an upper limit and a lower limit of each of one or more first transmission bands being a transmission band related to each operation of first filtering processing in a first multiplexing device configured to output a first wavelength multiplexed signal acquired by multiplexing each of one or more first processed signals acquired by performing the first filtering processing on each of one or more input transmission optical signals and a second multiplexing device configured to output a second wavelength multiplexed signal acquired by multiplexing each of one or more of the first wavelength multiplexed signals undergoing second filtering processing, in such a way that the upper limit and the lower limit are respectively different from an upper limit and a lower limit of each of one or more second transmission bands being a transmission band related to each operation of the second filtering processing.
Supplementary Note 21 A setting method including
   setting an upper limit and a lower limit of each of one or more fourth transmission bands being a transmission band related to each operation of fourth filtering processing in a first demultiplexing device configured to output a second reception wavelength multiplexed signal acquired by performing third filtering processing on each of one or more first demultiplexed signals acquired by demultiplexing an input first reception wavelength multiplexed signal and a second demultiplexing device configured to output a reception optical signal acquired by performing the fourth filtering processing on a second demultiplexed signal acquired by demultiplexing the second reception wavelength multiplexed signal, in such a way that an upper limit and a lower limit of each of one or more third transmission bands being a transmission band related to each operation of the third filtering processing are respectively different from an upper limit and a lower limit of each of one or more fourth transmission bands being a transmission band related to each operation of the fourth filtering processing.
Supplementary Note 22
   An optical transmission program causing a computer to execute:
   processing of outputting a first wavelength multiplexed signal acquired by multiplexing each of one or more first processed signals acquired by performing first filtering processing on each of one or more input transmission optical signals; and
   processing of outputting a second wavelength multiplexed signal acquired by multiplexing each of one or more of the first wavelength multiplexed signals undergoing second filtering processing, wherein
   an upper limit and a lower limit of each of one or more first transmission bands being a transmission band related to each operation of the first filtering processing are respectively different from an upper limit and a lower limit of each of one or more second transmission bands being a transmission band related to each operation of the second filtering processing.
Supplementary Note 23
   An optical reception program causing a computer to execute:
   processing of outputting a second reception wavelength multiplexed signal acquired by performing third filtering processing on each of one or more first demultiplexed signals acquired by demultiplexing a received first reception wavelength multiplexed signal; and
   processing of outputting a reception optical signal acquired by performing fourth filtering processing on a second demultiplexed signal acquired by demultiplexing the second reception wavelength multiplexed signal, wherein
   an upper limit and a lower limit of each of one or more third transmission bands being a transmission band related to each operation of the third filtering processing are respectively different from an upper limit and a lower limit of each of one or more fourth transmission bands being a transmission band related to each operation of the fourth filtering processing.
Supplementary Note 24
   A setting program causing a computer to
   set an upper limit and a lower limit of each of one or more first transmission bands being a transmission band related to each operation of first filtering processing in a first multiplexing device configured to output a first wavelength multiplexed signal acquired by multiplexing each of one or more first processed signals acquired by performing the first filtering processing on each of one or more input transmission optical signals and a second multiplexing device configured to output a second wavelength multiplexed signal acquired by multiplexing each of one or more of the first wavelength multiplexed signals undergoing second filtering processing, in such a way that the upper limit and the lower limit are respectively different from an upper limit and a lower limit of each of one or more second transmission bands being a transmission band related to each operation of the second filtering processing.
Supplementary Note 25 A setting program causing a computer to
   set an upper limit and a lower limit of each of one or more fourth transmission bands being a transmission band related to each operation of fourth filtering processing in a first demultiplexing device configured to output a second reception wavelength multiplexed signal acquired by performing third filtering processing on each of one or more first demultiplexed signals acquired by demultiplexing an input first reception wavelength multiplexed signal and a second demultiplexing device configured to output a reception optical signal acquired by performing the fourth filtering processing on a second demultiplexed signal acquired by demultiplexing the second reception wavelength multiplexed signal, in such a way that an upper limit and a lower limit of each of one or more third transmission bands being a transmission band related to each operation of the third filtering processing are respectively different from an upper limit and a lower limit of each of one or more fourth transmission bands being a transmission band related to each operation of the fourth filtering processing.

While the invention has been particularly shown and described with reference to example embodiments thereof, the invention is not limited to these embodiments. It will be understood by those of ordinary skill in the art that various changes in form and details may be made therein without departing from the spirit and scope of the present invention as defined by the claims.

This application is based upon and claims the benefit of priority from Japanese patent application No. 2018-087295, filed on April 27, 2018, the disclosure of which is incorporated herein in its entirety by reference.

### Reference signs List

100 Transmitting-side optical transmission device
100a Optical transmission device
101, 102, 10n WSS_CH_MUX
106 WSS_Band_MUX
101a, 10na, 106a Multiplexing device
101x First multiplexing device
106x Second multiplexing device
170, 270 Control unit
200 Receiving-side optical transmission device
201, 202, 20n WSS_CH_DEMUX
206 WSS_Band_DEMUX
300a Transmission line
401, 40m, 4r11, 4r12, 4rlm, 4r21, 4r22, 4r2m, 4rn1, 4rn2, 4rnm, 4s11, 4s12, 4s1m, 4s21, 4s22, 4s2m, 4sn1, 4sn2, 4snm, 501, 5r1, 5r2, 5rn, 5s1, 5s2, 5sn Band
611, 61m, 6n1, 6nk Transmitter
800 Optical communication system
A, B Optical signal
f1, f2, f2', fc, f41a, f4ma, f4mb, f4slma, f4slmb, f4s21a, f4s21b, f51a, f51b, f5sla, f5slb, f5s2a, f5s2b, f5sna, f5smb Frequency
r11, r12, r12', r12", rim, r1m', r1m", r21, r21', r21", r22, r2m, rn1, rn2, rnm Reception optical signal
R11, R12, R1m, R21, R22, R2m, Rn1, Rn2, Rnm Receiver
s11, s1m, sn1, snk, t11, t12, t12', t12", t1m, t1m', t1m", t21, t21', t21", t22, t2m, tn1, tn2, tnm Transmission optical signal
T11, T12, T1m, T21, T22, T2m, Tn1, Tn2, Tnm Transmitter

## Claims

1. An optical transmission device comprising:
a first multiplexing device configured to output a first wavelength multiplexed signal acquired by multiplexing each of one or more first processed signals acquired by performing first filtering processing on each of one or more input transmission optical signals; and
a second multiplexing device configured to output a second wavelength multiplexed signal acquired by multiplexing each of one or more of the first wavelength multiplexed signals undergoing second filtering processing, wherein
an upper limit and a lower limit of each of one or more first transmission bands being a transmission band related to each operation of the first filtering processing are respectively different from an upper limit and a lower limit of each of one or more second transmission bands being a transmission band related to each operation of the second filtering processing.

2. The optical transmission device according to claim 1, wherein
the second transmission band includes a transmission band part shared with the first transmission band.

3. The optical transmission device according to claim 1 or 2, further comprising
a transmitter performing the input.

4. The optical transmission device according to any one of claims 1 to 3, wherein
an upper limit of the first transmission band with a highest frequency out of the first transmission bands included in the second transmission band is higher than an upper limit of the second transmission band.

5. The optical transmission device according to claim 1 or 2, wherein
an upper limit of the first transmission band with a highest frequency out of the first transmission bands included in the second transmission band with a lower frequency out of two of the second transmission bands frequencies of which are close to each other is higher than an upper limit of the second transmission band.

6. The optical transmission device according to any one of claims 1 to 5, wherein
a lower limit of the first transmission band with a lowest frequency out of the first transmission bands included in the second transmission band is lower than a lower limit of the second transmission band.

7. The optical transmission device according to any one of claims 1 to 5, wherein
a lower limit of the first transmission band with a lowest frequency out of the first transmission bands included in the second transmission band with a higher frequency out of two of the second transmission bands frequencies of which are close to each other is lower than a lower limit of the second transmission band.

8. An optical transmission device comprising:
a first multiplexing device configured to output a first wavelength multiplexed signal acquired by multiplexing each of one or more first processed signals acquired by performing first filtering processing on each of one or more input transmission optical signals;
a second multiplexing device configured to output a second wavelength multiplexed signal acquired by multiplexing each of one or more of the first wavelength multiplexed signals undergoing second filtering processing; and
a setting unit configured to set an upper limit and a lower limit of each of one or more first transmission bands being a transmission band related to each operation of the first filtering processing, in such a way that the upper limit and the lower limit are respectively different from an upper limit and a lower limit of each of one or more second transmission bands being a transmission band related to each operation of the second filtering processing.

9. An optical reception device configured to receive the second wavelength multiplexed signal transmitted by the transmission device according to any one of claims 1 to 8 as a first reception wavelength multiplexed signal.

10. The optical reception device according to claim 9, comprising:
a first demultiplexing device configured to output a second reception wavelength multiplexed signal acquired by performing third filtering processing on each of one or more first demultiplexed signals acquired by demultiplexing the first reception wavelength multiplexed signal; and
a second demultiplexing device configured to output a reception optical signal acquired by performing fourth filtering processing on a second demultiplexed signal acquired by demultiplexing the second reception wavelength multiplexed signal, wherein
an upper limit and a lower limit of each of one or more third transmission bands being a transmission band related to each operation of the third filtering processing are respectively different from an upper limit and a lower limit of each of one or more fourth transmission bands being a transmission band related to each operation of the fourth filtering processing.

11. The optical reception device according to claim 10, further comprising
a receiver configured to receive the reception optical signal.

12. The optical reception device according to claim 11, wherein
an upper limit of the fourth transmission band with a highest frequency out of the fourth transmission bands included in the third transmission band is higher than an upper limit of the third transmission band.

13. The optical reception device according to claim 11, wherein
an upper limit of the fourth transmission band with a highest frequency out of the fourth transmission bands included in the third transmission band with a lower frequency out of two of the third transmission bands frequencies of which are close to each other is higher than an upper limit of the third transmission band.

14. The optical reception device according to any one of claims 10 to 13, wherein
a lower limit of the fourth transmission band with a lowest frequency out of the fourth transmission bands included in the third transmission band is lower than a lower limit of the third transmission band.

15. The optical reception device according to any one of claims 10 to 13, wherein
a lower limit of the fourth transmission band with a lowest frequency out of the fourth transmission bands included in the third transmission band with a higher frequency out of two of the third transmission bands frequencies of which are close to each other is lower than a lower limit of the third transmission band.

16. The optical reception device according to claim 9, comprising:
a first demultiplexing device configured to output a second reception wavelength multiplexed signal acquired by performing third filtering processing on each of one or more first demultiplexed signals acquired by demultiplexing the first reception wavelength multiplexed signal;
a second demultiplexing device configured to output a reception optical signal acquired by performing fourth filtering processing on a second demultiplexed signal acquired by demultiplexing the second reception wavelength multiplexed signal; and
a second setting unit configured to set an upper limit and a lower limit of each of one or more third transmission bands being a transmission band related to each operation of the third filtering processing, in such a way that the upper limit and the lower limit are respectively different from an upper limit and a lower limit of each of one or more fourth transmission bands being a transmission band related to each operation of the fourth filtering processing.

17. An optical communication system comprising
the optical reception device according to any one of claims 9 to 16; and
the transmission device.

18. An optical transmission method comprising:
outputting a first wavelength multiplexed signal acquired by multiplexing each of one or more first processed signals acquired by performing first filtering processing on each of one or more input transmission optical signals; and
outputting a second wavelength multiplexed signal acquired by multiplexing each of one or more of the first wavelength multiplexed signals undergoing second filtering processing, wherein
an upper limit and a lower limit of each of one or more first transmission bands being a transmission band related to each operation of the first filtering processing are respectively different from an upper limit and a lower limit of each of one or more second transmission bands being a transmission band related to each operation of the second filtering processing.

19. An optical reception method comprising:
outputting a second reception wavelength multiplexed signal acquired by performing third filtering processing on each of one or more first demultiplexed signals acquired by demultiplexing a received first reception wavelength multiplexed signal; and
outputting a reception optical signal acquired by performing fourth filtering processing on a second demultiplexed signal acquired by demultiplexing the second reception wavelength multiplexed signal, wherein
an upper limit and a lower limit of each of one or more third transmission bands being a transmission band related to each operation of the third filtering processing are respectively different from an upper limit and a lower limit of each of one or more fourth transmission bands being a transmission band related to each operation of the fourth filtering processing.

20. A setting method comprising
setting an upper limit and a lower limit of each of one or more first transmission bands being a transmission band related to each operation of first filtering processing in a first multiplexing device configured to output a first wavelength multiplexed signal acquired by multiplexing each of one or more first processed signals acquired by performing the first filtering processing on each of one or more input transmission optical signals and a second multiplexing device configured to output a second wavelength multiplexed signal acquired by multiplexing each of one or more of the first wavelength multiplexed signals undergoing second filtering processing, in such a way that the upper limit and the lower limit are respectively different from an upper limit and a lower limit of each of one or more second transmission bands being a transmission band related to each operation of the second filtering processing.

21. A setting method comprising
setting an upper limit and a lower limit of each of one or more fourth transmission bands being a transmission band related to each operation of fourth filtering processing in a first demultiplexing device configured to output a second reception wavelength multiplexed signal acquired by performing third filtering processing on each of one or more first demultiplexed signals acquired by demultiplexing an input first reception wavelength multiplexed signal and a second demultiplexing device configured to output a reception optical signal acquired by performing the fourth filtering processing on a second demultiplexed signal acquired by demultiplexing the second reception wavelength multiplexed signal, in such a way that an upper limit and a lower limit of each of one or more third transmission bands being a transmission band related to each operation of the third filtering processing are respectively different from an upper limit and a lower limit of each of one or more fourth transmission bands being a transmission band related to each operation of the fourth filtering processing.

22. A non-transitory computer-readable medium recording an optical transmission program causing a computer to execute:
processing of outputting a first wavelength multiplexed signal acquired by multiplexing each of one or more first processed signals acquired by performing first filtering processing on each of one or more input transmission optical signals; and
processing of outputting a second wavelength multiplexed signal acquired by multiplexing each of one or more of the first wavelength multiplexed signals undergoing second filtering processing, wherein
an upper limit and a lower limit of each of one or more first transmission bands being a transmission band related to each operation of the first filtering processing are respectively different from an upper limit and a lower limit of each of one or more second transmission bands being a transmission band related to each operation of the second filtering processing.

23. A non-transitory computer-readable medium recording an optical reception program causing a computer to execute:
processing of outputting a second reception wavelength multiplexed signal acquired by performing third filtering processing on each of one or more first demultiplexed signals acquired by demultiplexing a received first reception wavelength multiplexed signal; and
processing of outputting a reception optical signal acquired by performing fourth filtering processing on a second demultiplexed signal acquired by demultiplexing the second reception wavelength multiplexed signal, wherein
an upper limit and a lower limit of each of one or more third transmission bands being a transmission band related to each operation of the third filtering processing are respectively different from an upper limit and a lower limit of each of one or more fourth transmission bands being a transmission band related to each operation of the fourth filtering processing.

24. A non-transitory computer-readable medium recording a setting program causing a computer to
set an upper limit and a lower limit of each of one or more first transmission bands being a transmission band related to each operation of first filtering processing in a first multiplexing device configured to output a first wavelength multiplexed signal acquired by multiplexing each of one or more first processed signals acquired by performing the first filtering processing on each of one or more input transmission optical signals and a second multiplexing device configured to output a second wavelength multiplexed signal acquired by multiplexing each of one or more of the first wavelength multiplexed signals undergoing second filtering processing, in such a way that the upper limit and the lower limit are respectively different from an upper limit and a lower limit of each of one or more second transmission bands being a transmission band related to each operation of the second filtering processing.

25. A non-transitory computer-readable medium recording a setting program causing a computer to
set an upper limit and a lower limit of each of one or more fourth transmission bands being a transmission band related to each operation of fourth filtering processing in a first demultiplexing device configured to output a second reception wavelength multiplexed signal acquired by performing third filtering processing on each of one or more first demultiplexed signals acquired by demultiplexing an input first reception wavelength multiplexed signal and a second demultiplexing device configured to output a reception optical signal acquired by performing the fourth filtering processing on a second demultiplexed signal acquired by demultiplexing the second reception wavelength multiplexed signal, in such a way that an upper limit and a lower limit of each of one or more third transmission bands being a transmission band related to each operation of the third filtering processing are respectively different from an upper limit and a lower limit of each of one or more fourth transmission bands being a transmission band related to each operation of the fourth filtering processing.
